(19) Europäisches Patentamt
European Patent Office
Office européen des brevets

(11) EP 4 741 082 A1

# (12) EUROPEAN PATENT APPLICATION

(43) Date of publication:
**13.05.2026 Bulletin 2026/20**

(21) Application number: **25212444.1**

(22) Date of filing: **30.10.2025**

(51) International Patent Classification (IPC):
***B22F 10/28*** *(2021.01)* ***B33Y 10/00*** *(2015.01)*
***B33Y 30/00*** *(2015.01)* ***B22F 12/90*** *(2021.01)*
***B33Y 50/02*** *(2015.01)* ***B22F 10/38*** *(2021.01)*
***B22F 10/85*** *(2021.01)* ***G06T 7/00*** *(2017.01)*
***B22F 12/41*** *(2021.01)* ***B22F 10/80*** *(2021.01)*
***G06T 7/174*** *(2017.01)* ***G06T 7/50*** *(2017.01)*
***G01N 21/88*** *(2006.01)* *B29C 64/153 (2017.01)*
*B29C 64/393 (2017.01)* *B33Y 50/00 (2015.01)*

(52) Cooperative Patent Classification (CPC):
(C-Sets available)
**B33Y 50/00; B22F 10/28; B22F 10/80; B22F 10/85; B22F 12/41; B22F 12/90; B33Y 30/00; B33Y 50/02; G01N 21/88; G06T 7/0008; G06T 7/174;**
B22F 10/38; B33Y 10/00; G06T 7/0002;
G06T 7/0004 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.10.2024 JP 2024191454**

(71) Applicant: **Jeol Ltd.**
**Akishima, Tokyo 196-8558 (JP)**

(72) Inventors:
- **TSUTAGAWA, Nari**
  **Tokyo, 196-8558 (JP)**
- **KANEKO, Yuhei**
  **Tokyo, 196-8558 (JP)**
- **ASANUMA, Yuji**
  **Tokyo, 196-8558 (JP)**
- **TSUDA, Takashi**
  **Tokyo, 196-8558 (JP)**
- **SUWA, Kento**
  **Tokyo, 196-8558 (JP)**
- **OHARA, Shuma**
  **Tokyo, 196-8558 (JP)**
- **SHIBATA, Kohei**
  **Tokyo, 196-8558 (JP)**

(74) Representative: **Boult Wade Tennant LLP**
**Salisbury Square House**
**8 Salisbury Square**
**London EC4Y 8AP (GB)**

# (54) INFORMATION PROCESSING APPARATUS, DEFECT DETECTION METHOD, AND THREE-DIMENSIONAL POWDER BED FUSION ADDITIVE MANUFACTURING APPARATUS

(57) An information processing apparatus includes: a defect candidate specifying unit (72) that detects a defective portion generated in a layer as a defect candidate for each layer on the basis of layer data taken for a corresponding layer on which a manufactured object is manufactured by powder bed fusion additive manufacturing (PBF-AM) and specifies a plurality of defect candidates at positions substantially identical to each other in a plurality of layers adjacent in a layering direction; and a defect detection unit (73) that detects, on the basis of a size in the layering direction and a size in the layer of the plurality of defect candidates specified in the plurality of layers at positions substantially identical to each other, a defect remaining in the manufactured object.

EP 4 741 082 A1

(52) Cooperative Patent Classification (CPC): (Cont.)

C-Sets
B22F 2999/00, B22F 10/80, B22F 12/90,
B22F 2203/03;
B22F 2999/00, B22F 10/85, B22F 12/90;
B22F 2999/00, B22F 12/90, B22F 10/38

## Description

BACKGROUND

Technical Field

The present invention relates to an information processing apparatus, a defect detection method, and a three-dimensional powder bed fusion additive manufacturing (PBF-AM) apparatus.

Related Art

In recent years, three-dimensional powder bed fusion additive manufacturing (PBF-AM) techniques, which manufacture objects by overlapping thin layers of metal powder material layer by layer, have been attracting attention, and many types of PBF-AM techniques have been developed depending on differences in the powder materials and the manufacturing methods.

The manufacturing method of the conventional three-dimensional powder bed fusion additive manufacturing (PBF-AM) apparatus is, for example, to spread the powder material layer by layer over a base plate installed on an upper surface of a stage. Next, with respect to the powder material spread on the base plate, only a two-dimensional structure portion corresponding to one cross section of a manufactured object is fused by a heating mechanism including an electron beam or a laser. Then, such layers of the powder material are stacked layer by layer in a height direction (Z direction) to form the manufactured object. At the time of manufacturing each layer of the manufactured object, a powder bed is formed on the base plate, and thus this manufacturing method is also referred to as a powder bed method.

In the formation of the manufactured object, the powder material cannot be completely fused at a portion where sintering defect occurs, and unevenness occurs on a surface of the manufactured object in the middle of manufacturing. Since such unevenness may be a defect, in the three-dimensional PBF-AM apparatus, defect detection is performed on the basis of data acquired from a manufactured-object surface by performing camera photographing or back scattered electron (BSE) photographing. The camera photographing is, for example, a method of photographing the manufactured-object surface with visible light. The BSE photographing is a method of photographing the manufactured-object surface by detecting backscattered electrons of an electron beam emitted to the manufactured-object surface.

Layer data obtained by the camera photographing or the BSE photographing is displayed on a monitor as an XY cross-sectional view per layer of the manufactured object in the middle of manufacturing. A user can confirm the state of the XY cross section immediately after fusion of the powder material using the layer data. In addition, the user has been able to specify a portion (referred to as defect candidate) that may become a defect based on the unevenness of the manufactured-object surface in the middle of manufacturing. Examples of the defect candidate include an unevenness portion generated in the layer, and a portion insufficiently fused and formed with a space.

As a technique related to such defect detection, a technique described in Patent Literature 1 is known. Patent Literature 1 discloses that "the determination unit calculates, from the state of the protrusion measured by the surface state measurement unit, the height of the protrusion, and at least one of the total area of the region where the protrusion is generated and the occupation ratio of the protrusion in the sintered region, and compares the calculated values with the respective thresholds to determine whether the fabrication shape of the sintered layer is good or poor".

Citation List

Patent Literature

Patent Literature 1: JP 2020-200501 A

SUMMARY

In the powder bed method, a process of further spreading the powder material on the surface where the manufactured object is fused in the middle of manufacturing and repeating the fusion of the powder material again is performed until the manufacturing of the manufactured object is completed. For this reason, even in a portion of unevenness detected as a defect candidate, when thermal energy for two layers or three or more layers is received in the fusion process performed on the next layer and further the next layer, the portion of unevenness may be re-fused and the unevenness may disappear.

It can be determined that the defect is eliminated at the portion where the unevenness has disappeared by re-fusion.

Therefore, in the conventional method, the defect candidate can be specified on the basis of the unevenness of the manufactured-object surface in the middle of manufacturing. However, in the conventional method, it is not possible to guarantee whether the defect candidate specified in the middle of manufacturing remains in the manufactured object after the manufacturing is completed, and the accuracy of defect detection is not high.

The present invention has been made in view of such a situation, and an object thereof is to enable confirmation as to whether or not the defect candidate remains as the defect in the manufactured object on the basis of layer data obtained from a plurality of layers.

An information processing apparatus according to the present invention includes: a defect candidate specifying unit that detects, on a basis of layer data obtained for a corresponding layer on which a manufactured object is manufactured by powder bed fusion additive manufacturing (PBF-AM), a defective portion generated in the layer as a defect candidate for the corresponding layer and specifies a plurality of the defect candidates at positions substantially identical to each other in a plurality of the layers adjacent in a layering direction; and a defect detection unit that detects, on the basis of a size in the layering direction and a size in the layer of the plurality of defect candidates at positions substantially identical to each other specified in the plurality of layers, a defect remaining in the manufactured object.

Note that the above information processing apparatus is one aspect of the present invention, and a defect detection method and a three-dimensional PBF-AM apparatus reflecting one aspect of the present invention are also configured similarly to the above information processing apparatus.

According to the present invention, it is possible to confirm whether or not a defect candidate remains as a defect in a manufactured object after completion of manufacturing on the basis of layer data obtained from a plurality of layers.

Problems, configurations, and effects other than those described above will be clarified by the following description of embodiments.

BRIEF DESCRIPTION OF DRAWINGS

FIG. 1 is a schematic cross-sectional view schematically illustrating a three-dimensional powder bed fusion additive manufacturing (PBF-AM) apparatus according to a first embodiment of the present invention;
FIG. 2 is a block diagram illustrating a configuration example of a control system of the three-dimensional PBF-AM apparatus according to the first embodiment of the present invention;
FIG. 3 is a block diagram illustrating a configuration example of a control block of a PC according to the first embodiment of the present invention;
FIG. 4 is a flowchart illustrating an example of a defect detection processing according to the first embodiment of the present invention;
FIG. 5 is a flowchart illustrating an example of a defect candidate specifying processing according to the first embodiment of the present invention;
FIG. 6 is a perspective view of a manufactured object according to the first embodiment of the present invention;
FIG. 7 is a diagram illustrating an example of a BSE image of a manufactured object viewed from above in a Z direction during PBF-AM according to the first embodiment of the present invention;
FIG. 8 is a diagram illustrating an example of a BSE image in which a defect candidate A generated in the N-th layer according to the first embodiment of the present invention is confirmed;
FIG. 9 is a diagram illustrating an example of a BSE image in which a defect candidate B generated in the (N+1)-th layer according to the first embodiment of the present invention is confirmed;
FIG. 10 is a diagram illustrating an example of a BSE image in which the defect candidate A and the defect candidate B are confirmed when the N-th layer and the (N+1)-th layer according to the first embodiment of the present invention overlap each other;
FIG. 11 is a diagram illustrating an example of the defect candidates A and B whose sizes are extremely different from each other according to the first embodiment of the present invention;
FIG. 12 is a flowchart illustrating an example of a defect determination processing according to the first embodiment of the present invention;
FIG. 13 is a diagram illustrating an example of defect candidates that are across a plurality of layers according to the first embodiment of the present invention;
FIG. 14 is a diagram illustrating an example of defect candidate IDs assigned to integrated defect candidates by a defect detection unit according to the first embodiment of the present invention;
FIG. 15 is a diagram illustrating an example of measuring lengths in XY direction and the Z direction of integrated defect candidates by the defect detection unit according to the first embodiment of the present invention;
FIG. 16 is a flowchart illustrating an example of a display control processing according to the first embodiment of the present invention;
FIG. 17 is a diagram illustrating an example in which specific numerical values are assigned to the sizes of integrated defect candidates by a defect detection unit according to a third embodiment of the present invention;
FIG. 18 is a flowchart illustrating an example of a defect candidate specifying processing according to a fourth embodiment of the present invention;
FIG. 19 is a flowchart illustrating an example of a defect determination processing according to the fourth embodiment of the present invention;
FIG. 20 is a diagram illustrating an example of measuring lengths in the XY direction and the Z direction of integrated defect candidates by the defect detection unit according to the fourth embodiment of the present invention;
FIG. 21 is a flowchart illustrating an example of a defect candidate specifying processing according to a seventh embodiment of the present invention;
FIG. 22 is a flowchart illustrating an example of a defect determination processing according to the seventh embodiment of the present invention;
FIG. 23 is a flowchart illustrating an example of a defect determination processing according to an eighth embodiment of the present invention; and
FIG. 24 is a flowchart illustrating an example of a defect determination processing according to a ninth embodiment of the present invention.

DETAILED DESCRIPTION

Hereinafter, embodiments of an information processing apparatus, a three-dimensional powder bed fusion additive manufacturing (PBF-AM) apparatus, and a defect detection method according to the present invention will be described with reference to the drawings. In the drawings, the same members are denoted by the same reference numerals, and redundant description is omitted.

[1. First Embodiment]

1-1. Configuration of Three-dimensional Powder Bed Fusion Additive Manufacturing Apparatus

First, a three-dimensional powder bed fusion additive manufacturing (PBF-AM) apparatus according to a first embodiment (hereinafter, referred to as "present example") of the present invention will be described with reference to FIG. 1.

FIG. 1 is a schematic cross-sectional view schematically illustrating a three-dimensional PBF-AM apparatus according to the present example. In the following description, in order to clarify a shape, a positional relationship, and the like of each part of the three-dimensional PBF-AM apparatus, the right and left direction in FIG. 1 is referred to as an X direction, the depth direction in FIG. 1 is referred to as a Y direction, and the vertical direction in FIG. 1 is referred to as a Z direction. The X direction, the Y direction, and the Z direction are direction orthogonal to one another. In addition, the X direction and the Y direction are parallel to the horizontal direction, and the Z direction is parallel to the vertical direction.

A three-dimensional powder bed fusion additive manufacturing (PBF-AM) apparatus 1 illustrated in FIG. 1 is an apparatus that irradiates a powder material 32 made of a metal powder such as titanium, copper, or tungsten with an electron beam 15 (an example of a manufacturing beam) to fuse the powder material 32, and stacks layers in which the powder material 32 is solidified to manufacture a three-dimensional object.

As illustrated in FIG. 1, the three-dimensional PBF-AM apparatus 1 includes a vacuum chamber 3, a beam irradiation device 2 (one example of electron gun), a powder feeding device 16, a build table 18, a build box 20, and a recovery box 21. In addition, the three-dimensional PBF-AM apparatus 1 includes a build plate 22, an inner base 24, a plate moving device 26, a radiation shield cover 28, an electron shield 30, a camera 42, and a shutter 44. Furthermore, the three-dimensional PBF-AM apparatus 1 includes a plurality of detection units 46 that detect backscattered electrons.

The vacuum chamber 3 is a chamber for creating a vacuum state by evacuating air from the chamber by a vacuum pump, which is not illustrated. The inside of the vacuum chamber 3 is maintained in vacuum. In addition, the beam irradiation device 2 is attached to the vacuum chamber 3.

The beam irradiation device 2 is a device that irradiates the build plate 22 or a manufactured surface 32a of a powder layer formed of the powder material 32 with the electron beam 15, and includes the electron gun (an example of a beam irradiation part) and an electron optical system. The manufactured surface 32a corresponds to the upper surface of the powder layer. The state of the powder layer changes as steps of the three-dimensional PBF-AM proceed. The beam irradiation device 2 has, as the electron optical system, the electron gun that is a generation source of the electron beam 15, a focusing lens that focuses the electron beam 15 generated by the electron gun, and a deflection lens that deflects the electron beam 15 focused by the focusing lens, which are not illustrated.

The focusing lens is configured using a focusing coil, and focuses the electron beam 15 by a magnetic field generated by the focusing coil. The deflection lens is configured using a deflection coil, and deflects the electron beam 15 by a magnetic field generated by the deflection coil. Therefore, the electron optical system performs scanning with the electron beam 15 according to a melting condition under which the powder material is fused, and fuses the uppermost layer (an example of a powder bed) of the powder material spread on the build plate 22 by the electron beam 15.

The powder feeding device 16 (an example of a power supply system) supplies the powder material 32, as an example of a powder material which is a raw material of a manufactured object 38, onto the build table 18 to spread over the build plate 22, and forms the powder layer. The powder feeding device 16 has a hopper 16a, a powder feeder 16b, and a recoater 16c.

The hopper 16a is a container for storing metal powder. The powder feeder 16b is equipment that drops the powder material 32 stored in the hopper 16a onto the build table 18.

The recoater 16c is a member of an elongated shape elongated in the Y direction, and has a blade 16d for spreading powder. The recoater 16c spreads the powder material 32 dropped by the powder feeder 16b over the build table 18 and the build plate 22. The recoater 16c is provided to be movable in the X direction in order to spread the powder material 32 over the entire surface of the build table 18.

The build table 18 is horizontally disposed inside the vacuum chamber 3. The build table 18 is disposed below the powder feeding device 16. A central portion of the build table 18 is opened. The opening shape of the build table 18 is circular in plan view or square in plan view (for example, a quadrangle in plan view).

The build box 20 is a box that forms a space for manufacturing. Inside the vacuum chamber 3, the build box 20 having a circular or angular cross section is provided. An upper end portion of the build box 20 is connected to an opening edge of the build table 18. A lower end portion of the build box 20 is connected to a bottom wall of the vacuum chamber 3.

The recovery box 21 recovers powder material 32 supplied more than necessary among the powder material 32 that has been supplied onto the build table 18 by the powder feeding device 16.

The build plate 22 forms a manufactured object 38 using the powder material 32. The manufactured object 38 is formed by being additively manufactured on the build plate 22. The build plate 22 is formed to be circular in plan view or polygonal in plan view in accordance with the opening shape of the build table 18. The build plate 22 is connected (grounded) to the inner base 24 via a ground wire 34 so as not to be in an electrically floating state. The inner base 24 is held at a ground (GND) potential.

At the time of manufacturing each layer of the manufactured object 38, a powder bed is formed on the build plate 22 and the inner base 24. The powder bed is obtained by spreading the powder material 32 up to a position several mm higher than the build table 18 installed on the build box 20. The powder bed is formed by the powder feeding device 16 filled with the powder material 32 and the recoater 16c.

The inner base 24 is provided to be movable in the vertical direction (Z direction). The build plate 22 moves in the vertical direction integrally with the inner base 24. The inner base 24 has a larger outer dimension than that of the build plate 22. The inner base 24 slides in the vertical direction along an inner side surface of the build box 20. A seal member 36 is attached to an outer peripheral portion of the inner base 24. The seal member 36 is a member that maintains slidability and sealability between the outer peripheral portion of the inner base 24 and the inner side surface of the build box 20.

The seal member 36 is made of a material having heat resistance and elasticity. The build plate 22 on which the manufactured object 38 is manufactured is disposed above the inner base 24 over which the powder material 32 spreads.

The plate moving device 26 moves the build plate 22 and the inner base 24 in the vertical direction. The plate moving device 26 is provided inside and below the build box 20. The plate moving device 26 includes a shaft 26a and a drive mechanism unit 26b. The shaft 26a is connected to a lower surface of the inner base 24. The drive mechanism unit 26b includes a motor and a power transmission mechanism, which are not illustrated, and drives the power transmission mechanism using the motor as a drive source to move the build plate 22 and the inner base 24 integrally with the shaft 26a in the vertical direction (Z direction). The power transmission mechanism includes, for example, a rack and pinion mechanism, a ball screw mechanism, and the like.

The radiation shield cover 28 is disposed between the build plate 22 and the beam irradiation device 2 in the Z direction. The radiation shield cover 28 is made of metal such as stainless steel or the like. The radiation shield cover 28 shields radiant heat generated when the powder material 32 is irradiated with the electron beam 15 by the beam irradiation device 2.

The electron beam 15 is emitted to the powder material 32 and fuses the powder material 32. At this time, if radiant heat radiated from the manufactured surface 32a of the powder layer is widely diffused into the vacuum chamber 3, thermal efficiency is deteriorated.

By contrast, in a case where the radiation shield cover 28 is disposed above the build plate 22, the heat radiated from the manufactured surface 32a is shielded by the radiation shield cover 28, and the shielded heat is reflected by the radiation shield cover 28 and returned to the build plate 22 side. Therefore, the heat generated by the irradiation of the electron beam 15 can be efficiently used.

In addition, the radiation shield cover 28 serves a function of suppressing adhesion (deposition) of an evaporating substance generated when the powder material 32 is irradiated with the electron beam 15 to an inner wall of the vacuum chamber 3.

Here, a deposition substance is metal vapor, metal sputtering by fire works, and the like.

That is, when the powder material 32 is irradiated with the electron beam 15, a part of the fused metal becomes an atomized evaporating substance and rises from the manufactured surface 32a. The radiation shield cover 28 is disposed so as to cover a space above the manufactured surface 32a so that the evaporating substance does not diffuse into the vacuum chamber 3.

The manufactured object 38 is constructed by two-dimensionally fusing the powder material 32 of one layer existing in a region of the manufactured object 38 by the electron beam 15 from the beam irradiation device 2 and overlapping the fused layer. A region other than the manufactured object 38 of the powder material 32 spread over the build plate 22 is a pre-sintered body 35 obtained by pre-sintering the powder material 32, and has conductivity by the electron beam 15 emitted from the beam irradiation device 2.

The electron shield 30 is attached below the radiation shield cover 28. The electron shield 30 has an opening 30a and a shield portion 30b. In forming the manufactured object 38, the electron shield 30 is disposed to cover an upper surface of the powder material 32, that is, the manufactured surface 32a.

At this time, the opening 30a exposes the powder material 32 spread over the build plate 22. In addition, the shield portion 30b is a conductive material that shields the powder material 32 in an unsintered region located outside the opening 30a. Note that the shield portion 30b is desirably formed of the same type of metal material as the powder material.

The shape of the opening 30a is formed in accordance with the shape of the build plate 22. For example, if the build plate 22 is circular in plan view, the shape in plan view of the opening 30a is formed to be circular accordingly, and if the build plate 22 is square in plan view, the shape in plan view of the opening 30a is formed to be square accordingly.

The electron shield 30 is disposed below the radiation shield cover 28. The opening 30a and the shield portion 30b of the electron shield 30 are disposed between the build plate 22 and the radiation shield cover 28 in the Z direction. The electron shield 30 has an enclosure portion 30c. The enclosure portion 30c is disposed so as to surround the space above the opening 30a. A part (upper portion) of the enclosure portion 30c overlaps the radiation shield cover 28 in the Z direction.

The enclosure portion 30c has a function of shielding radiant heat generated from the manufactured surface 32a and a function of suppressing diffusion of the evaporating substance generated from the manufactured surface 32a. That is, the enclosure portion 30c has the similar function as that of the radiation shield cover 28. Although not illustrated, the electron shield 30 is provided with a vertical drive mechanism and is configured to move upward during recoating so as not to interfere with the recoater 16c.

The electron shield 30 is made of metal having a melting point higher than that of the powder material 32 used as a raw material of the manufactured object 38. In addition, the electron shield 30 is made of a material having low reactivity with the powder material 32. Examples of a constituent material of the electron shield 30 can include titanium. In addition, the electron shield 30 may be made of a metal of the same material as the powder material 32 to be used. Although not illustrated, the electron shield 30 is electrically grounded to GND. The electron shield 30 suppresses the occurrence of powder scattering to a small scale by an electric shield function in a case where the powder material 32 is pre-sintered by irradiation with the electron beam 15 in a preheating step before the main sintering step described later.

On the upper surface of the radiation shield cover 28, the camera 42 for photographing a state of the manufactured surface and the shutter 44 for preventing vapor deposition on the camera 42 as much as possible are attached. The camera 42 is a camera capable of photographing the manufactured surface 32a of the powder layer. The camera 42 is disposed to be shifted in position in the Y direction from the beam irradiation device 2 so as not to interfere with the position of the beam irradiation device 2.

The camera 42 is preferably constituted by a visible light camera such as a digital video camera. The camera 42 photographs the manufactured surface 32a of a powder layer to generate an image (image data) of the powder layer. Therefore, the image generated by the camera 42 is an image indicating a state of the manufactured surface 32a of the powder layer. Note that, the photographing by the camera 42 is performed in a state where illumination light emitted from an illumination light source (not illustrated) included in the three-dimensional PBF-AM apparatus 1 is applied to the manufactured surface 32a of the powder layer.

The shutter 44 protects the camera 42 and an observation window so that the evaporating substance generated from the manufactured surface 32a when the powder material 32 is fused by the irradiation of the electron beam 15 does not adhere to the camera 42 and the observation window. The photographing of the manufactured surface 32a by the camera 42 is performed in a state where the shutter 44 is opened. The camera 42 basically continues photographing, and the shutter 44 is closed only during the fusion process. In addition, in a step in which the evaporating substance is likely to be generated and a step in which the generation amount of the evaporating substance is large, that is, in a step of fusing the powder material 32 by the electron beam 15, photographing by the camera 42 is performed in a state where the shutter 44 is closed.

The plurality of detection units 46 that detect the backscattered electrons are disposed below the beam irradiation device 2.

Specifically, the detection unit 46 is disposed between the beam irradiation device 2 and the manufactured surface 32a of the manufactured object 38 formed on the build plate 22. The detection unit 46 measures backscattered electrons generated by the electron beam 15 with which the manufactured object 38 or the pre-sintered body 35 is irradiated, and outputs data of backscattered electron signals as layer data to a PC 54 or a hard computer (not illustrated) illustrated in FIG. 2 to be described later.

In recent years, for the purpose of quality control of the manufactured object 38, a three-dimensional powder bed fusion additive manufacturing (PBF-AM) apparatus 1 to which a function of monitoring a surface of the manufactured object 38 is added has been provided. In the three-dimensional PBF-AM apparatus 1, the surface of the manufactured object 38 can be visualized from not only data of the image obtained by photographing the surface of the manufactured object 38 using the camera 42 described above but also data in which the detection unit 46 has detected the backscattered electrons reflected from the surface of the manufactured object 38. However, the three-dimensional PBF-AM apparatus 1 may have either a configuration including only the camera 42 or a configuration including the camera 42 and the detection unit 46.

In the following embodiments, an example will be described in which defect detection is performed using a BSE image formed on the basis of backscattered electrons detected by the detection unit 46. In the monitoring using the backscattered electrons using the electron beam, the PC 54 or the hard computer performs arithmetic operation and imaging of the backscattered electron signal, and the like to monitor the state of the powder bed and the manufactured object 38. In a case where a defect is detected by monitoring using the backscattered electron, the PC 54 usually acquires monitoring data immediately after fusing a pre-sintered body.

1-2. Configuration Example of Control System of Three-dimensional Powder Bed Fusion Additive Manufacturing Apparatus

Next, a configuration example of a control system of the three-dimensional powder bed fusion additive manufacturing (PBF-AM) apparatus 1 will be described.

FIG. 2 is a block diagram illustrating a configuration example of the control system of the three-dimensional PBF-AM apparatus 1 according to the present example. The three-dimensional PBF-AM apparatus 1 includes the detection unit 46 described above. Furthermore, in FIG. 2, hardware and software parts for performing manufacturing control, which are outside the configuration of the three-dimensional PBF-AM apparatus 1 illustrated in FIG. 1, are added.

As illustrated in FIG. 2, the three-dimensional PBF-AM apparatus 1 includes a polarization amplifier control circuit 51 indicating an electron beam control unit, an analog-digital conversion circuit (ADC) 52, a preamplifier 53, a personal computer (PC) 54 indicating an example of a control unit, and a BSE monitor 55.

The polarization amplifier control circuit 51 is connected to the beam irradiation device 2 and the PC 54. The polarization amplifier control circuit 51 controls the beam irradiation device 2 on the basis of preset beam scanning information. Thus, the beam irradiation device 2 irradiates a predetermined position with the electron beam 15. In addition, the polarization amplifier control circuit 51 transmits beam irradiation position information indicating the irradiation position of the electron beam 15 to the PC 54.

The preamplifier 53 is connected to the detection unit 46 and the ADC 52. Then, the preamplifier 53 converts a backscattered electron current detected by the detection unit 46 from a current signal to a voltage signal. The voltage signal converted by the preamplifier 53 is transmitted to the ADC 52. The ADC 52 converts the backscattered electron signal, which is the voltage signal, from an analog signal to a digital signal and transmits the digital signal to the PC 54.

The PC 54 is an example of an information processing apparatus, and includes a central processing unit (CPU) 54a, a read only memory (ROM) 54b, a random access memory (RAM) 54c, and a recording device 54d.

The CPU 54a reads a program code of software for realizing each function according to the present embodiment from the ROM 54b, loads the program code to the RAM 54c, and executes the program code. Variables, parameters, and the like generated during arithmetic processing in the CPU 54a are temporarily written to the RAM 54c, and the variables, the parameters, and the like are read by the CPU 54a as appropriate.

An image processing unit, which is one function of the CPU 54a, captures an image generated by the camera 42 and performs predetermined image processing on the captured image. Then, the PC 54 outputs a camera image subjected to the image processing by the image processing unit to the BSE monitor 55. In addition, a software program for the manufacturing control (hereinafter, abbreviated as "manufacturing control software"), which the CPU 54a reads from the ROM 54b and executes, controls the polarization amplifier control circuit 51. In addition, the manufacturing control software controls the preamplifier 53 via the ADC 52.

As the recording device 54d, for example, a nonvolatile recording medium such as a hard disk drive (HDD), a solid state drive (SSD), an optical disc, a magnetooptical disc, or a flash memory is used. In addition to an operating system (OS) and various parameters, a program for causing the PC 54 to function is recorded in the recording device 54d.

The ROM 54b and the recording device 54d record programs, data, and the like required for the operation of the CPU 54a, and are used as an example of a non-transitory computer-readable storage medium storing a program executed by the PC 54. The recording device 54d stores the camera image generated by the image processing unit. Furthermore, the recording device 54d stores therein the beam irradiation position information transmitted from the polarization amplifier control circuit 51.

The CPU 54a selects a predetermined arithmetic expression from a plurality of arithmetic expressions according to a manufacturing step. Then, the CPU 54a performs arithmetic processing on the backscattered electron signal using the selected arithmetic expression to calculate an arithmetic signal. Then, the image processing unit images the arithmetic signal to acquire a backscattered electron composition image (BSE image). The CPU 54a outputs the acquired backscattered electron composition image (BSE image) to the BSE monitor 55. In addition, the recording device 54d stores therein the backscattered electron composition image (BSE image).

The BSE monitor 55 includes, for example, a display such as a liquid crystal display (Liquid Crystal Display) or an organic electro luminescence display (ELD). The BSE monitor 55 displays the BSE image and the camera image output from the PC 54 on a display screen.

As an input device 56, for example, a keyboard, a mouse, and the like are used. The user can perform predetermined input operations and instructions to the PC 54 using the input device 56.

1-3. Operation Example of Three-Dimensional Powder Bed Fusion Additive Manufacturing Apparatus

Next, an operation example of the three-dimensional powder bed fusion additive manufacturing (PBF-AM) apparatus 1 will be described.

First, the user creates manufacturing data for melting in accordance with a shape of the manufactured object 38 to be manufactured using the manufacturing control software in the PC 54. At this time, the user inputs appropriate melting conditions including a correction function or the like. After completing the creation of the manufacturing data, the user causes the three-dimensional PBF-AM apparatus 1 to start manufacturing based on the manufacturing data.

Next, the beam irradiation device 2 operates on the basis of a control command given from the PC 54 to heat the build plate 22. The beam irradiation device 2 irradiates the build plate 22 with the electron beam 15 through the opening 30a of the electron shield 30, and scans the build plate 22 with the electron beam 15. Thus, the build plate 22 is heated to enough temperature at which the powder material 32 is pre-sintered.

Next, the powder material 32 is spread over the build plate 22. The plate moving device 26 moves down the build plate 22 by a predetermined amount by operating on the basis of the control command given from the PC 54.

Next, the user disposes the upper surface of the build plate 22 covered with the powder material 32 at substantially the same height as the upper surface of the powder material 32 spread over the build table 18. Next, the user lowers the electron shield 30 to the upper surface of the build plate 22, and brings the electron shield 30 into contact with the powder material 32 so as to cover the powder material 32 existing on the outer periphery of the build plate 22.

Next, the beam irradiation device 2 irradiates a region slightly smaller than the entire upper surface of the build plate 22 with the electron beam 15. That is, a region slightly smaller than the entire upper surface of the build plate 22 is a region where the electron beam 15 does not hit the opening 30a inside the electron shield 30, and the beam irradiation device 2 irradiates this region with the electron beam. As described above, the beam irradiation device 2 irradiates a region slightly smaller than the entire upper surface of the build plate 22 with the electron beam 15, thereby raising the temperature of the build plate 22 in advance to enough temperature at which the powder material 32 is completely pre-sintered.

At the time of starting manufacturing, the plate moving device 26 lowers the inner base 24 by a predetermined amount so that the upper surface of the build plate 22 is slightly lower than the upper surface of the powder material 32 spread over the build table 18. At this time, the build plate 22 lowers by a predetermined amount $\Delta Z$ together with the inner base 24. The slightly lowered $\Delta Z$ corresponds to the subsequent layer thickness in the Z direction. Thereafter, the plate moving device 26 moves the electron shield 30 upward.

Next, the powder feeding device 16 drops the powder material 32 supplied from the hopper 16a to the powder feeder 16b onto the build table 18 by the powder feeder 16b. Thereafter, the powder feeding device 16 moves the recoater 16c from one end side to the other end side in the X direction to spread the powder material 32 over the inner base 24 to form a powder bed.

As a result, the powder material 32 is spread over the build table 18 with a thickness corresponding to $\Delta Z$. In addition, the excess powder material 32 is recovered in the recovery box 21. After the recoater 16c comes out to the outside the electron shield 30, the powder feeding device 16 lowers the electron shield 30 to the manufactured surface again, and the electron shield 30 covers the powder material 32 existing on the outer periphery of the build plate 22.

Next, the beam irradiation device 2 operates on the basis of the control commands given by the polarization amplifier control circuit 51 and the PC 54, thereby preheating the powder layer on the build plate 22. That is, the beam irradiation device 2 applies powder-heat (P.H) onto the powder layer on the build plate 22 to pre-sinter the powder material 32. When the powder material 32 is pre-sintered, the powder material 32 can have electrical conductivity. Consequently, the powder material 32 can suppress powder scattering in the main sintering step performed after the preheating step.

The beam irradiation device 2 irradiates the powder material 32 spread over the build plate 22 with the electron beam 15. In addition, the beam irradiation device 2 scans a region with the electron beam 15, the region being enough region where the electron beam does not hit the opening 30a inside the electron shield 30 and being wider than a region for forming the manufactured object 38 (hereinafter, also referred to as "manufacturing region"). Thus, the powder material 32 present in the manufacturing region and the powder material 32 existing around the manufacturing region are both pre-sintered.

The beam irradiation device 2 fuses, according to a two-dimensional shape obtained by slicing a designed manufactured object prepared in advance at ΔZ intervals, a region having the two-dimensional shape with the electron beam 15. After fusing and solidifying the powder material 32 for one layer, the beam irradiation device 2 irradiates a region slightly smaller than the build plate 22 with the electron beam 15 again to raise the temperature, and prepares for spreading the powder material 32 over the region. The beam irradiation device 2 raises the temperature of the region to the predetermined temperature, and then turns off the electron beam 15 and moves the electron shield 30 upward.

The plate moving device 26 lowers the inner base 24 for ΔZ, and moves again the recoater 16c along the upper surface of the powder material 32 spread over the build table 18 to the opposite side. Then, the plate moving device 26 spreads the powder material 32 for ΔZ over the front layer, and lowers again the electron shield 30 to the manufactured surface.

The beam irradiation device 2 irradiates a region where the electron beam 15 does not hit the opening 30a inside the electron shield 30 with the electron beam 15, reliably pre-sintering the powder material 32 that has been newly spread, and then, fuses a region having a two-dimensional shape corresponding to the layer. The beam irradiation device 2 repeats this process to form the manufactured object 38.

In addition, the beam irradiation device 2 acquires a backscattered electron composition image (BSE image) as described below. First, the beam irradiation device 2 operates on the basis of control commands given from the polarization amplifier control circuit 51 and the PC 54, thereby scanning the pre-sinter region where the pre-sintered powder material 32 exists with the electron beam 15. At this time, the beam irradiation device 2 reduces an electron beam current of the electron beam 15 as much as possible, and irradiates the manufactured surface 32a in focus. The detection unit 46 detects the backscattered electrons generated by the electron beam 15. The detection unit 46 outputs the detected backscattered electron signal to the PC 54 via the preamplifier 53 and the ADC 52.

1-4. Configuration Example of Control Block

FIG. 3 is a block diagram illustrating a configuration example of a control block of the PC 54. When the CPU 54a of the PC 54 executes the manufacturing control software, a defect detection processing performed by functional blocks in cooperation with each other illustrated in FIG. 3 is realized. In addition, the functional blocks of the PC 54 illustrated in FIG. 3 can be configured by being embedded into the three-dimensional PBF-AM apparatus 1.

The three-dimensional PBF-AM apparatus 1 illustrated in FIG. 1 includes an input unit 60, the PC 54, and a display unit 90.

The input unit 60 has a function of enabling input operation by the user, and the function is realized by the input device 56 illustrated in FIG. 2. The input unit 60 is used by the user to perform the input operation. The input unit 60 is a functional unit of the input device 56 illustrated in FIG. 2. The input operation of the user includes setting of each parameter to be described later, display selection of a defect or a defect candidate, and the like. In addition, an instruction to display the manufactured object 38 in the middle of manufacturing or after the manufacturing is completed in 2 dimension (D) or 3D on the display unit 90 is also performed by the input operation of the user.

The PC 54 includes a control unit 70 and a recording unit 80.

The control unit 70 has functions of arithmetic operation and control for each processing of the present example, and the functions are realized by the CPU 54a, the ROM 54b, and the RAM 54c illustrated in FIG. 2.

The recording unit 80 has a function of recording each parameter, each data, each image, and the like of the present example, and the function is realized by the recording device 54d illustrated in FIG. 2.

The control unit 70 includes a manufacturing control unit 71, a defect candidate specifying unit 72, a defect detection unit 73, and a display control unit 74. The recording unit 80 includes a parameter recording unit 81 and a defect information recording unit 82.

The parameter recording unit 81 records parameters such as a threshold to be compared in each processing to be described later.

The defect information recording unit 82 records defect information including layer data, a defect candidate specified by the defect candidate specifying unit 72, a defect detection result, and the like.

The manufacturing control unit 71 controls the processing related to powder bed fusion additive manufacturing (PBF-AM) of the three-dimensional PBF-AM apparatus 1 such as the beam irradiation device 2 and the plate moving device 26 described above. In addition, after melting is performed in the PBF-AM processing, the manufacturing control unit 71 controls the beam irradiation device 2 so that the detection unit 46 detects backscattered electrons generated by scanning the manufactured surface with an emission current low enough to detect the backscattered electrons, and acquires a backscattered electron image. In a case where the height of a concave portion or a convex portion on the layer surface exceeds a predetermined threshold, the manufacturing control unit 71 records, in the defect information recording unit 82, the layer data determined to have unevenness on the manufactured surface. However, the defect information recording unit 82 also records layer data that is not determined to have unevenness on the manufactured surface.

The defect candidate specifying unit 72 reads, from the defect information recording unit 82, the layer data taken for the corresponding layer on which the manufactured object 38 is manufactured by powder bed fusion additive manufacturing (PBF-AM), and detects, on the basis of the layer data, a defective portion generated in the layer as a defect candidate for the corresponding layer. In addition, the defect candidate specifying unit 72 specifies a plurality of defect candidates at positions substantially identical to each other in a plurality of layers adjacent in the layering direction.

The defect detection unit 73 detects the defect remaining in the manufactured object 38 on the basis of the size in the layering direction and the size in the layer of the plurality of defect candidates located at positions substantially identical to each other specified in the plurality of layers. Here, the defect detection unit 73 integrates the plurality of defect candidates at positions substantially identical to each other in the layering direction, and assigns a defect candidate identifier (for example, ID 1 to 4) correspondingly to integrated defect candidates. Furthermore, the defect detection unit 73 measures a layering direction length (Lz) of integrated defect candidates and a first direction length (length Lx in the X direction) and a second direction length (length Ly in the Y direction) in the layer intersecting the layering direction of integrated defect candidates for a corresponding layer, and sets a length of maximum among the first direction length (Lx) and the second direction length (Ly) as a maximum layer length (Lxy). Then, the defect detection unit 73 sets a longer length among the layering direction length (Lz) and the maximum layer length (Lxy) as a maximum length, and detects the integrated defect candidates as defects in a case where the maximum length exceeds a maximum length threshold ($\delta$).

The display control unit 74 controls the display form of the image to be displayed on the display unit 90 on the basis of the layer data and the defect information read from the defect information recording unit 82 and the input operation input from the input unit 60. For example, the display control unit 74 generates a 2D image, a 3D image, a graph, and the like of a manufactured surface of the manufactured object 38, and generates a screen (an example of a visualized image) for displaying these images on the display unit 90. In addition, the display control unit 74 also performs control (enlargement and reduction of an image, movement of an image to be displayed, and the like) to change the display content of the screen in accordance with the input operation. Then, the display control unit 74 generates a visualized image obtained by visualizing the defect information, and performs control so that the visualized image can be displayed on the display unit 90 during PBF-AM. The display control unit 74 causes information such as the state of the manufactured object 38, the shape of the defect candidate (FIGS. 8 to 11, 15, and the like to be described later), the presence or absence of defect detection, and various graphs to be displayed on various screens on the display unit 90 even in the middle of the PBF-AM processing, and allows the user to confirm the displayed information.

The display unit 90 has a function of displaying images processed by the PC 54, and the function is realized by the BSE monitor 55 illustrated in FIG. 2. As the display unit 90, for example, a liquid crystal display device, an organic EL display device, or the like is used. In a case where a touch panel display is used for the PC 54, the input unit 60 and the display unit 90 are integrally formed.

Note that, in FIG. 3, the PC 54 includes the recording unit 80, but the recording unit 80 may be included in a recording medium outside the PC 54. In this case, the control unit 70 reads and processes the data of the parameter, the layer data, and the defect information recorded in the external recording medium.

1-5. Example of Defect Detection Processing

Next, an example of the defect detection processing will be described with reference to the flowcharts and explanatory diagrams in and after FIG. 4. In the following description, only the operation of a portion related to defect detection, the portion being different from the conventional one, will be described, and the other portions related to the manufacturing process are the same as the contents described in the item of the prior art, and thus are omitted. The PC 54 (manufacturing control software) of the present example can perform defect detection in real time during the PBF-AM of the manufactured object 38.

FIG. 4 is a flowchart illustrating an example of the defect detection processing. The defect detection processing is an example of the defect detection method performed by the control unit 70.

First, the manufacturing control unit 71 illustrated in FIG. 3 substitutes an initial value 0 for m representing the m-th layer to set m+1 as the first layer (S1). Next, the manufacturing control unit 71 performs the PBF-AM processing described above in the first layer (S2).

Next, the manufacturing control unit 71 determines whether or not the PBF-AM processing of the plurality of layers is completed (S3). In a case of not completing the PBF-AM processing of the plurality of layers (NO in S3), that is, only the PBF-AM processing of the first layer has completed, the process returns to step S1, and the PBF-AM processing of the second and subsequent layers is performed. On the other hand, in a case of having completed the PBF-AM processing of the plurality of layers (YES in S3), the processing proceeds to step S4.

Next, the defect candidate specifying unit 72 performs a defect candidate specifying processing illustrated in FIG.

5 (S4). Here, the defect candidate specifying processing will be described in detail.

FIG. 5 is a flowchart illustrating an example of the defect candidate specifying processing. This defect candidate specifying processing is a subroutine of step S4 in FIG. 4.

First, the defect candidate specifying unit 72 measures an area of each of two defect candidates adjacent to each other in the layering direction in which at least a part of the XY cross section overlaps (S11). Here, the area of the defect candidate will be described.

The defect candidate specifying unit 72 specifies a position of a defect candidate on the basis of the layer data obtained at the time of manufacturing each layer. The defect candidate specifying unit 72 assumes that the positions of the defect candidates are at positions substantially identical to each other in the XY cross section in the plurality of layers, and does not consider the position in the Z direction (Z coordinate). Here, attention is paid to the position of the XY cross section in the plurality of layers, and an area where a plurality of defect candidates overlap in adjacent layers is considered.

However, two defect candidates overlapping in adjacent layers do not always have the same size. Therefore, the defect candidate specifying unit 72 sets, as a defect candidate A, a defect having a larger size in the XY cross section and sets, as a defect candidate B, a defect having a smaller size in the XY cross section, out of the two defect candidates. Here, as an example of layers adjacent in the Z direction, a powder layer of an N-th layer (N is an integer of 1 or more) and a powder layer of an (N+1)-th layer are taken. In the following description, the powder layer of the N-th layer and the powder layer of the (N+1)-th layer are abbreviated as an N-th layer and an (N+1)-th layer, respectively.

Here, the manufactured object 38 and the defect candidate will be described with reference to FIGS. 6 to 11.

FIG. 6 is a perspective view of the manufactured object 38. This perspective view is a 3D display of a plurality of the manufactured objects 38 manufactured by the PBF-AM processing performed only once on the basis of computer aided design (CAD) data. This example indicates that a total of ten manufactured objects 38 are manufactured by PBF-AM. Every time melting of one layer of the manufactured object 38 is completed, the manufacturing control unit 71 illustrated in FIG. 3 acquires the BSE image of the manufactured object 38 as layer data and records the BSE image in the defect information recording unit 82. For example, when the manufacturing control unit 71 simultaneously carries out PBF-AM of ten manufactured objects 38 as illustrated in FIG. 6, the BSE images of the ten manufactured objects 38 are acquired as the layer data and recorded in the defect information recording unit 82.

FIG. 7 is a diagram illustrating an example of a BSE image of the manufactured object 38 viewed from above in the Z direction during PBF-AM. Since it is in the middle of PBF-AM, the manufactured surface of the manufactured object 38 is visible in the BSE image. In addition, black spots appear faintly on the upper part of the manufactured objects 38. The black spots are unevenness generated on the manufactured surface during PBF-AM, and are recorded in the layer data by the manufacturing control unit 71 as described above. Then, the defect candidate specifying unit 72 specifies a black spot as a defect candidate.

FIG. 8 is a diagram illustrating an example of a BSE image in which the defect candidate A generated in the N-th layer is confirmed.

FIG. 9 is a diagram illustrating an example of a BSE image in which the defect candidate B generated in the (N+1)-th layer is confirmed.

As described above, since the area of the defect candidate generated in the N-th layer is larger than that of the defect candidate generated in the (N+1)-th layer, the defect candidate generated in the N-th layer is referred to as the defect candidate A, and the defect candidate generated in the (N+1)-th layer is referred to as the defect candidate B. The positional relationship between the defect candidate A and the defect candidate B in the Z direction is not important, and the defect candidate A and the defect candidate B are discriminated by the defect candidate specifying unit 72 only by the size in the XY cross section.

FIG. 10 is a diagram illustrating an example of a BSE image in which the defect candidate A and the defect candidate B are confirmed when the N-th layer and the (N+1)-th layer overlap each other.

The positions of the defect candidate A and the defect candidate B in the XY cross section are shifted, but the defect candidate A and the defect candidate B partially overlap. A portion where the defect candidate A and the defect candidate B overlap is referred to as an overlapping portion AB. The defect candidate specifying unit 72 measures an area SAB of the defect candidate A, the defect candidate B, and the overlapping portion AB in the XY cross section for a corresponding layer on the basis of the layer data.

In step S11, the defect candidate specifying unit 72 measures, among the plurality of defect candidates overlapping in the plurality of layers adjacent in the layering direction, an area (SA) of a defect candidate of the N-th layer specified by the N-th layer and an area (SB) of a defect candidate of the (N+1)-th layer specified by the (N+1)-th layer. In addition, the defect candidate specifying unit 72 calculates an overlapping area (SAB) of an overlapping portion where the defect candidate of the N-th layer and the defect candidate of the (N+1)-th layer overlap in the layering direction.

Next, the defect candidate specifying unit 72 calculates an area ratio of the two defect candidates and an area ratio of the overlapping portion AB (S12). Here, the defect candidate specifying unit 72 calculates a ratio (RA) of the overlapping area to the area of the defect candidate of the N-th layer and a ratio (RB) of the overlapping area to the area of the defect candidate of the (N+1)-th layer as area ratios. Therefore, the defect candidate specifying unit 72 expresses an area ratio of the overlapping portion AB to the defect candidate A as RA. The area ratio RA is calculated by the following equation (1).

$$RA = SAB/SA \quad ...(1)$$

Similarly, the defect candidate specifying unit 72 represents an area ratio of the overlapping portion AB to the defect candidate B as RB. The area ratio RB is calculated by the following equation (2).

$$RB = SAB/SB \quad ...(2)$$

Next, the defect candidate specifying unit 72 determines whether or not the conditions of the area ratios RA and RB and the parameters $\alpha$ and $\beta$ are satisfied (S13). The parameter $\alpha$ is an example of an area ratio threshold to be compared with the area ratio RA, and the parameter $\beta$ is an example of an area ratio threshold to be compared with the area ratio RB.

In a case of determining that the area ratios RA and RB and the conditions of the parameters $\alpha$ and $\beta$ are satisfied (YES in S13), the defect candidate specifying unit 72 specifies that the two defect candidates A and B are at positions substantially identical to each other (S14).

For example, in the parameter recording unit 81, a total of two area ratio thresholds respectively serving as thresholds of the area ratios RA and RB are recorded in the parameter recording unit 81. The area ratio threshold parameter serving as the threshold of the area ratio RA is denoted by $\alpha$, and the area ratio threshold parameter serving as the threshold of the area ratio RB is denoted by $\beta$. The area ratio threshold parameter $\alpha$ is an example of a first area threshold, and the area ratio threshold parameter $\beta$ is an example of a second area threshold. In a case where the ratio RA of the overlapping area is equal to or larger than a first area threshold ($\alpha$) and the ratio RB of the overlapping area to the area of the defect candidate of the (N+1)-th layer is equal to or larger than a second area threshold ($\beta$), the defect candidate specifying unit 72 specifies that the defect candidate of the N-th layer and the defect candidate of the (N+1)-th layer are at the positions substantially identical to each other.

For example, in a case where the following condition (3) is satisfied, the defect candidate specifying unit 72 defines that the two defect candidates A and B are at positions substantially identical to each other.

$$RA \geq \alpha \text{ and } RB \geq \beta,$$

or

$$RA \geq \alpha \text{ and } RB \geq \beta,$$

or

$$RA \geq \alpha \text{ and } RB > \beta,$$

or

$$RA > \alpha \text{ and } RB \geq \beta \quad ...(3)$$

In step S13, in a case of not satisfying the conditions of the area ratios RA and RB and the parameters $\alpha$ and $\beta$ (NO in S13), the defect candidate specifying unit 72 determines whether or not the conditions of the area ratios RA and RB and the parameter $\gamma$ are satisfied (S15). In a case of determining that the area ratios RA and RB and the conditions of the parameter $\gamma$ are satisfied (YES in S15), the defect candidate specifying unit 72 specifies that the two defect candidates A and B are at positions substantially identical to each other (S14).

In FIG. 10, the case where the sizes of the defect candidates A and B do not change extremely has been described. However, in the actual PBF-AM processing, the sizes of the defect candidates A and B may extremely change. Even in such a case, in order to enable the defect candidate specifying unit 72 to specify that the defect candidates A and B are at positions substantially identical to each other, an area ratio threshold parameter $\gamma$ is recorded in the parameter recording unit 81 separately from the area ratio threshold parameters $\alpha$ and $\beta$. Here, the parameter $\gamma$ will be described with reference to FIG. 11.

FIG. 11 is a diagram illustrating an example of the defect candidates A and B whose sizes are extremely different from each other.

In the example illustrated in FIG. 11, the position of the defect candidate B is a position included in the defect candidate A, and the defect candidate A is much larger than the defect candidate B. In this case, although the area ratio RA described above is smaller than an area ratio threshold parameter $\alpha$, the area ratio RB is larger than the area ratio threshold parameter $\beta$, and thus the condition (3) is not satisfied. However, as can be seen from FIG. 11, the defect candidates A and B are considered to be at positions substantially identical to each other.

Therefore, the area ratio threshold parameter $\gamma$ is recorded in the parameter recording unit 81 separately from the area ratio threshold parameters $\alpha$ and $\beta$. In a case where the following condition (4) is satisfied and one of the area ratio RA and the area ratio RB exceeds the area ratio threshold parameter $\gamma$, the defect candidate specifying unit 72 defines that the two defect candidates are at positions substantially identical to each other regardless of the other value.

$$RA > \gamma \text{ or } RB > \gamma \ \ldots (4)$$

A definition by which the defect candidate specifying unit 72 obtains positions substantially identical to each other of two defect candidates using the above equation (1), (2), the condition (3), or (4) is referred to as "position definition 1".

After step S14, or if the defect candidate specifying unit 72 determines that the area ratios RA and RB and the conditions of the parameter $\gamma$ are not satisfied (NO in S15), the defect candidate specifying unit 72 records the position and the size of the specified defect candidate as defect information in the defect information recording unit 82 (S16), and proceeds to step S5 in FIG. 4. In step S5, the defect detection unit 73 performs defect determination processing.

Note that the reason why the defect information is recorded in the defect information recording unit 82 also in the NO determination in step S15 is that there is a possibility that a defect candidate specified at the time of further sintering the next layer overlaps with the current defect candidate.

Next, processing in which the defect detection unit 73 detects a defect from a defect candidate will be described with reference to FIGS. 12 to 14, taking an xz cross-sectional view of a part of the manufactured object 38 additively manufactured from the N-th layer to the (N+7)-th layer as an example. In FIG. 13 and subsequent drawings, it is indicated that the defect detection range by the defect detection unit 73 is the first to the eighth layer when N is 1.

FIG. 12 is a flowchart illustrating an example of the defect determination processing. This defect determination processing is a subroutine of step S5 in FIG. 4. In the following description of the flowchart and the xz cross-sectional view, for convenience of description, the direction is expressed in lower case like the x, y, or z direction, but it is assumed that each direction represents the same direction as the X, Y, or Z direction illustrated in FIG. 1 and the like.

First, the defect detection unit 73 reads defect information including a defect candidate of a layer adjacent in the layering direction (Z direction) from the defect information recording unit 82 (S21). However, the defect detection unit 73 may directly take in the defect information output from defect candidate specifying unit 72.

Next, the defect detection unit 73 integrates a plurality of defect candidates determined to be at positions substantially identical to each other across a plurality of layers according to the position definition 1 described above (S22). Next, the defect detection unit 73 assigns a defect candidate ID to the corresponding whole integrated defect candidates (S23). Here, a specific example of the processing in steps S22 and S23 will be described with reference to FIGS. 13 and 14.

FIG. 13 is a diagram illustrating an example of defect candidates that are across a plurality of layers.

A broken line illustrated in the drawing represents a boundary of each layer. In addition, a rectangular frame divided by a solid line represents a defect candidate generated in each layer. The defect candidate has been specified by the defect candidate specifying unit 72.

FIG. 14 is a diagram illustrating an example of defect candidate IDs assigned to integrated defect candidates by the defect detection unit 73.

The defect detection unit 73 integrates a plurality of defect candidates determined to be at positions substantially identical to each other across a plurality of layers according to the position definition 1 described above. The defect detection unit 73 assigns the defect candidate ID to the corresponding whole integrated defect candidates.

In the PBF-AM processing, the powder layers are additively manufactured in the order of the N-th layer, the (N+1)-th layer, ... and so on. The defect candidate specified in the (N+1)-th layer and the defect candidate specified in the (N+2)-th layer have been determined to be at positions substantially identical to each other defined by the position definition 1 by the processing of the defect candidate specifying unit 72. Therefore, the defect detection unit 73 integrates two defect candidates located at positions substantially identical to each other. Then, the defect detection unit 73 adds defect candidates ID1 and ID2 to the respective sets of integrated defect candidates integrated in the (N+1)-th layer and the (N+2)-th layer.

The defect detection unit 73 also integrates a defect candidate specified in the (N+3)-th layer that is at a position substantially identical to a defect candidate specified for the first time in the (N+2)-th layer, and assigns a defect candidate ID 3 to integrated defect candidates. Similarly, the defect detection unit 73 also integrates a defect candidate specified in the (N+6)-th layer at a position substantially identical to a defect candidate specified for the first time in the (N+5)-th layer, and assigns a defect candidate ID 4 to integrated defect candidates. Note that the defect candidate IDs assigned to integrated defect candidates by the defect detection unit 73 are in a state of being assigned the same defect candidate ID as long as the layers are continuous.

Returning to FIG. 12, the description will be continued. The defect detection unit 73 measures, after assigning a defect candidate ID in step S23, lengths of the XY direction and the Z direction for the corresponding whole integrated defect candidates (S24). Here, processing in which the defect detection unit 73 measures the lengths in the XY direction and the Z direction will be described with reference to FIG. 15.

FIG. 15 is a diagram illustrating an example of measuring lengths in the XY direction and the Z direction of integrated defect candidates by the defect detection unit 73.

The defect detection unit 73 measures a length in the XY direction and a length Lz in the Z direction of each of the sets of integrated defect candidates. For example, the defect detection unit 73 measures the length in the Z direction of integrated defect candidates to which the defect candidate ID 1 is assigned as Lz1 and the length in the X direction as Lx1. In FIG. 15, the length in the Y direction, which is the depth direction of the drawing, is not illustrated, but the defect detection unit 73 measures the length in the Y direction as Ly1.

Similarly to the defect candidate of the defect candidate ID 1, the defect detection unit 73 measures the length in the Z direction of integrated defect candidates to which defect candidate ID 2 is assigned as Lz2 and the length in the X direction as Lx2. In addition, the defect detection unit 73 measures the length in the Z direction of integrated defect candidates to which defect candidate ID 3 is assigned as Lz3 and the length in the X direction as Lx3. In addition, the defect detection unit 73 measures the length in the Z direction of integrated defect candidates to which the defect candidate ID 4 is assigned as Lz4 and the length in the X direction as Lx4.

In a case of not distinguishing the defect candidate IDs in the following description, the length in the X direction of integrated defect candidates is referred to as a "length Lx", the length in the Y direction is referred to as a "length Ly", and the length in the Z direction is referred to as a "length Lz", except for the defect candidate ID.

Returning to FIG. 12, the description will be continued.

After the processing of step S24, the defect detection unit 73 calculates a longer length among the length Lx in the X direction and the length Ly in the Y direction measured for the corresponding layer as a "maximum layer length Lxy" (S25). The maximum layer length Lxy is the longer one among the maximum layer length Lx max of the defect candidate in the X direction and the maximum layer length Ly max in the Y direction. Here, the maximum layer length Lx max represents a length of maximum among the plurality of lengths Lx. In addition, the maximum layer length Ly max represents a length of maximum among the plurality of lengths Ly.

Next, the defect detection unit 73 compares the length Lz in the Z direction with the maximum layer length Lxy, and sets the longer one as a "maximum length" (S26). Next, the defect detection unit 73 determines whether or not the maximum length exceeds the maximum length threshold δ read from the maximum parameter recording unit 81 (S27).

In a case of determining that the maximum length satisfies the following condition (5) exceeding the maximum length threshold δ (YES in S27), the defect detection unit 73 determines integrated defect candidates as defects (S28), and proceeds to step S6 in FIG. 4.

$$\text{Maximum length} > \text{Maximum length threshold } \delta \quad \ldots (5)$$

On the other hand, in a case of determining that the above condition (5) that the maximum length exceeds the maximum length threshold δ is not satisfied (NO in S27), the defect detection unit 73 does not determine integrated defect candidates as defects, and proceeds to step S6 in FIG. 4.

After step S5 in FIG. 4, the display control unit 74 determines whether or not there is an input operation of the user (S6). In a case of determining that there has been an input operation of the user, (YES in S6), the display control unit 74 proceeds to the processing in step S7, and performs display control processing. On the other hand, in a case of determining that there is no input operation of the user (NO in S6), the display control unit 74 proceeds the processing to step S8.

Here, the display control processing (processing of step S7) to which the process proceeds in a case of determining in step S6 that there is an input operation of the user will be described.

FIG. 16 is a flowchart illustrating an example of the display control processing. This defect candidate specifying processing is a subroutine of step S7 in FIG. 4.

First, the display control unit 74 receives an input operation of the user (S31). Next, the display control unit 74 reads the defect candidate and the defect information from the defect information recording unit 82 according to the input operation (S32).

Next, the display control unit 74 edits the defect candidate and the defect information into a visualized image (S33). At this time, the display control unit 74 performs display control processing of editing a 2D or 3D display image of a defect candidate and defect information and an image obtained by graphing various types of information to create a screen that can be displayed on the display unit 90.

Next, the display control unit 74 outputs the image visualized in step S33 to the display unit 90 (see FIG. 3) (S34), and proceeds the processing to step S8 in FIG. 4. For example, a screen including an image obtained by forming a plurality of additively manufactured layers into a three-dimensional image, a graph of defect information for the corresponding layer, and the like is displayed on the display unit 90 as an image in which defect candidates and defect information are visualized. In addition, the defect determined by the defect detection unit 73 is displayed on the display unit 90 as error information. Therefore, even during PBF-AM, the user can confirm the defect candidate and the defect information online.

After the processing of step S7 of FIG. 4 or after the NO determination of step S6, the manufacturing control unit 71 determines whether or not the PBF-AM of the final layer is completed (S8). In a case of determining that PBF-AM of the final layer is not completed (NO in S8), the manufacturing control unit 71 returns to step S1, counts up m of the m-th layer, and continues PBF-AM of the next and subsequent layers, the defect candidate specifying processing, the defect determination processing, and the display control processing. In the defect determination processing, the process of integrating the defect candidates using the layer data subjected to PBF-AM processing until counting up of m of the m-th layer and determining the defect is repeatedly performed until PBF-AM of the final layer is completed.

On the other hand, in a case of determining that PBF-AM of the final layer is completed (YES in S8), the manufacturing control unit 71 ends the defect detection processing illustrated in FIG. 4.

The above-described defect detection method according to the first embodiment is referred to as "detection method 1". Note that the parameters $\alpha$, $\beta$, $\gamma$, and $\delta$ described above may be changed each time PBF-AM is performed, or may be fixed once determined. In addition, the value of the parameter may be changed for each type of powder used in the PBF-AM processing.

In the defect detection method according to the first embodiment, in a case where the maximum length (longer one of maximum length Lz and maximum length Lxy) of integrated defect candidates is larger than the maximum length threshold $\delta$, the integrated defect candidates are determined to be a defect. Since the defect formed long in the layering direction in this manner is highly likely to remain in the manufactured object 38 after the completion of manufacturing, measures such as stopping the PBF-AM processing of the manufactured object 38 in which the defect is detected can be taken even during PBF-AM. By taking such a measure, it is possible to prevent the consumption of the material and power due to the useless PBF-AM processing.

Conventionally, only XY cross-sectional data of a layer on which defect detection is performed has been used with respect to the layer on which the defect detection is performed. Therefore, in the conventional defect detection method, it is erroneously detected that the defect remains in the manufactured object 38 although the defect detected in a certain layer may disappear as the PBF-AM processing proceeds. On the other hand, in the present embodiment, in addition to the XY cross-sectional data of the layer on which the defect detection is performed, the XY cross-sectional data of a layer additively manufactured after the layer on which the defect detection is performed is also used for the defect detection. Therefore, a defect candidate that has disappeared after a plurality of layers are additively manufactured is not erroneously detected as a defect. As a result, the accuracy of the defect detection remaining in the manufactured object 38 can be increased.

In addition, since the information about the defect determined during PBF-AM is displayed on the display unit 90, the user can confirm the status of the defect, the shape of the defect candidate of the defect, and the like. Therefore, the user can perform redo of the PBF-AM processing, reset of various parameters, and the like at an early stage when the defect is determined, and can obtain an intended manufactured object 38.

Note that, in the defect detection method (detection method 1) according to the first embodiment, the example in which the display control processing in step S7 of FIG. 4 is performed by the online real-time processing has been described, but the display control processing may be performed after the PBF-AM processing. In this case, the display control processing in step S7 is performed independently in accordance with the input operation of the user. In addition, the display control processing may be performed by an external server (cloud server or the like) different from the three-dimensional PBF-AM apparatus 1. In this case, a user in a base different from the facility in which the three-dimensional PBF-AM apparatus 1 is installed can confirm the result of the PBF-AM processing.

In addition, the defect candidate indicated as defect candidate ID 2 in FIG. 15 has a shape in which the defect candidates are in series at positions substantially identical to each other in multiple layers. The defect candidate is not limited to such a shape, and may branch in the middle. In addition, two defect candidates specified in a certain layer may be connected in a layer additively manufactured next. Even such defect candidates having various shapes can be reliably detected as long as the defect affects the quality of the manufactured object 38 by the defect detection method according to the present embodiment.

[2. Second Embodiment]

Next, a defect detection method according to a second embodiment of the present invention will be described.

The defect detection method according to the second embodiment is performed using the three-dimensional PBF-AM apparatus 1 according to the first embodiment and the control unit 70 and the recording unit 80 in the PC 54. Then, in the defect detection method according to the second embodiment, the same processing is performed from step S1 of FIG. 4 to step S26 of FIG. 12 according to the first embodiment.

In the second embodiment, maximum length thresholds $\delta z$ and $\delta xy$ used by the defect detection unit 73 to determine a defect are recorded in the parameter recording unit 81. Then, in a case where the maximum length is a layering direction length Lz and the layering direction length Lz exceeds the maximum length threshold δz in the layering direction, or in a case where the maximum length is the maximum layer length Lxy and the maximum layer length Lxy exceeds the maximum layer length threshold δxy in the layer, the defect detection unit 73 detects integrated defect candidates as defects.

For example, in step S27 (see FIG. 12) of the defect detection method according to the second embodiment, in a case where the maximum length is Lz, the defect detection unit 73 compares the maximum length Lz with the threshold δz. Then, in a case of determining that the maximum length Lz is larger than the threshold δz, the defect detection unit 73 proceeds to step S28, and determines integrated defect candidates as defects.

On the other hand, in a case where the maximum length is Lxy (Lx max or Ly max), the defect detection unit 73 compares the maximum length Lxy with the maximum layer length threshold δxy. Then in a case of determining that the maximum length Lxy is larger than the maximum layer length threshold δxy, the defect detection unit 73 proceeds to step S28 and determines integrated defect candidates as defects.

The above-described defect detection method according to the second embodiment is referred to as "detection method 2".

In the first embodiment, the threshold is unified to δ regardless of the XYZ direction with respect to the maximum length. However, there is a high possibility that how the powder material is melted changes between the XY direction and the Z direction. For example, how the powder melts in the XY direction changes depending on the intensity of the electron beam, the motion of scanning in the XY direction, and the like. On the other hand, how the powder melts in the Z direction varies depending on the depth of the electron beam in the layering direction. Therefore, in the second embodiment, the maximum length in the XY direction and that in the Z direction are compared with each threshold value by changing the threshold value to be compared in two patterns in a case where the maximum length is in the XY direction and in a case where the maximum length is in the Z direction. Therefore, in the XY direction and the Z direction, a defect candidate that can vary depending on how the powder material melts can be appropriately determined as a defect.

Note that the parameters α, β, γ, δz, and δxy described above may be changed each time PBF-AM is performed, or may be fixed once determined. In addition, the value of the parameter may be changed for each type of powder to use. In addition, the value of the parameter may be changed for each type of powder used in the PBF-AM processing.

[3. Third Embodiment]

Next, a defect detection method according to a third embodiment of the present invention will be described.

The defect detection method according to the third embodiment is performed using the three-dimensional PBF-AM apparatus 1 according to the first embodiment and the control unit 70 and the recording unit 80 in the PC 54. Then, in the defect detection method according to the third embodiment, the same processing is performed from step S1 of FIG. 4 to step S25 of FIG. 12 according to the first embodiment.

In the third embodiment, the defect detection unit 73 prepares a plurality of maximum length thresholds in the layering direction and maximum layer length thresholds in the layers, and detects integrated defect candidates as defects in a case where the maximum layer length in the layer corresponds to a range defined by the maximum layer length threshold and the layering direction length exceeds the maximum length threshold associated with the maximum layer length thresholds.

Therefore, maximum length thresholds δxy and δz used by the defect detection unit 73 to determine the defect are recorded in the parameter recording unit 81. Furthermore, the parameter recording unit 81 records a combination of maximum length thresholds δxy and δz used for case classification into conditions (6-1) to (6-3) described later. Here, n represents the number of case classification. The maximum length threshold δxy ranges from δxy_1 to δxy_n. In addition, the maximum length threshold δz ranges from δz_1 to δz_n+1.

For example, in the case of n = 2, five thresholds of δxy_1, δxy_2, δz_1, δz_2, and δz_3 are recorded in the parameter recording unit 81. In step S27 of FIG. 12, the defect detection unit 73 performs case classification as follows depending on the size of the maximum layer length Lxy. Then, the defect detection unit 73 selectively uses the maximum length threshold δz depending on each case, and determines an integrated defect candidates satisfying any one of the following conditions (6-1) to (6-3) as defects.

(1) In the case of Lxy ≥ δxy_1 and Lz ≥ δz_1, the defect detection unit 73 determines integrated defect candidates as defects....(6-1)

(2) In the case of δxy_1 > Lxy ≥ δxy_2, if Lz ≥ δz_2, the defect detection unit 73 determines integrated defect candidates as defects....(6-2)

(3) In the case of δxy_2 > Lxy, if Lz ≥ δz_3, the defect detection unit 73 determines integrated defect candidates as defects....(6-3)

The above-described defect detection method according to the third embodiment is referred to as "detection method 3".

Here, an advantage of case classification for the maximum length threshold δz depending on the size of the maximum layer length Lxy will be described.

It is expected that the probability of becoming a defect varies depending on the size of the maximum layer length Lxy. Specifically, it is considered that the larger the size of the maximum layer length Lxy, the more likely it is to be a defect, and the smaller the size of the maximum layer length Lxy, the less likely it is to be melted and remain as a defect in the subsequent layers. This means that the larger the size of the maximum layer length Lxy, the more likely it is to be a defect even when the value of the maximum length Lz is small, and the smaller the size of the maximum layer length Lxy, the less likely it is to remain as a defect unless the maximum length Lz is large. Therefore, there is a possibility that an appropriate value of the maximum length threshold δz varies depending on the size of the maximum layer length Lxy. The advantage of case classification for the maximum length threshold δz depending on the size of the maximum layer length Lxy is that it is possible to appropriately determine the presence or absence of a defect even in a case where there is a tendency as described above.

Here, the threshold δ and the size of the defect candidate will be described with specific example of numerical values.

FIG. 17 is a diagram illustrating an example in which specific numerical values are assigned to the sizes of integrated defect candidates by the defect detection unit 73.

There are four types of integrated defect candidates illustrated in FIG. 17, and ID 11 to ID 14 are assigned as defect candidate IDs to the respective defect candidates. Note that in the defect candidate of the (N+7)-th layer, the defect candidate of the (N+8)-th layer is actually at positions substantially identical to each other, and thus, it is assumed that the defect candidate ID 14 is assigned.

In addition, numerical values (numerical values for explanation rather than actual measurement values) are also assigned to the measured maximum layer length Lxy and maximum length Lz for integrated defect candidates with the defect candidate ID 11 to ID 14. Next, as an example, parameters of each maximum length threshold are set as follows. These parameters are recorded in the parameter recording unit 81 illustrated in FIG. 3.

- δxy_1 = 4
- δxy_2 = 2
- δz_1 = 2
- δz_2 = 4
- δz 3 = 6

The case classifications illustrated in the conditions (6-1) to (6-3) are expressed as follows.

(1) In the case of Lxy ≥ δxy_1 = 4, if Lz ≥ δz_1 = 2, the defect detection unit 73 determines integrated defect candidates as defects....(6-1)

(2) In the case of δxy_1 = 4 > Lxy ≥ δxy_2 = 2, if Lz ≥ δz_2 = 4, the defect detection unit 73 determines integrated defect candidates as defects....(6-2)

(3) In the case of δxy_2 = 2 > Lxy, if Lz ≥ δz_3 = 6, the defect detection unit 73 determines integrated defect candidates as defects....(6-3)

In a case where the conditions (6-1) to (6-3) are applied to the defect candidate ID 11 to ID 14 illustrated in FIG. 17, the defect detection unit 73 determines that integrated defect candidates having the defect candidate ID 14 are not a defect and integrated defect candidates having the defect candidates ID 11 to ID 13 are determined as a defect.

By using the conditions (6-1) to (6-3) by the defect detection unit 73 according to the third embodiment, it is possible to obtain a determination result that cannot be obtained in a case where the threshold is only δ as in the first embodiment or in a case where the threshold is δxy or δz as in the second embodiment. Therefore, it is possible to improve the accuracy with which the defect detection unit 73 determines a defect candidate as a defect.

Note that, in the third embodiment, case classification is performed by the size of the maximum layer length Lxy, and the value of the threshold δz is changed in each case. In addition, the parameters α, β, γ, δxy_1, ..., δxy_n, δz_1, ..., δz_n+1 may be changed each time PBF-AM is performed, or may be fixed once determined. In addition, the value of the parameter may be changed for each type of powder used.

[4. Fourth Embodiment]

Next, a defect detection method according to a fourth embodiment of the present invention will be described.

The defect detection method according to the fourth embodiment is performed using the three-dimensional PBF-AM apparatus 1 according to the first embodiment and the control unit 70 and the recording unit 80 in the PC 54. In the defect detection method according to the fourth embodiment, the same processing is performed from step S1 in FIG. 4 to step S11 in FIG. 5 according to the first embodiment. Then, in the defect detection method according to the fourth embodiment, processing in which steps in FIGS. 4 and 5 according to the first embodiment are partially changed is performed.

FIG. 18 is a flowchart illustrating an example of a defect candidate specifying processing according to the fourth embodiment.

First, the defect candidate specifying unit 72 measures an area of each of two defect candidates adjacent to each other in the layering direction in which at least a part of the XY cross section overlaps (S11).

Next, the defect candidate specifying unit 72 measures, among the plurality of defect candidates overlapping in the plurality of layers adjacent in the layering direction, an area SA of a defect candidate of a N-th layer specified by the N-th layer and an area SB of a defect candidate of a (N+1)-th layer specified by the (N+1)-th layer, and calculates an overlapping area SAB of the overlapping portion where the N-th layer defect candidate and the (N+1)-th layer defect candidate overlap in the layering direction. For example, the defect candidate specifying unit 72 measures an area of each of two defect candidates in which at least a part of the XY cross section overlaps in step S11, and then calculates the overlapping area SAB of the overlapping portion AB where the two defect candidates A and B overlap in the XY cross section (S12A).

Next, in a case where the overlapping area SAB is equal to or larger than an overlapping portion area threshold ε, the defect candidate specifying unit 72 specifies that the defect candidate of the N-th layer and the defect candidate of the (N+1)-th layer are at positions substantially identical to each other. For example, the defect candidate specifying unit 72 determines whether or not the following condition (7) indicated by the overlapping area SAB of the overlapping portion AB and the parameter ε is satisfied (S13A). In the fourth embodiment, the parameter recording unit 81 stores an overlapping portion area threshold ε used by the defect candidate specifying unit 72 to specify a plurality of defect candidates at positions substantially identical to each other.

$$SAB \geq \varepsilon \text{ or } SAB > \varepsilon \quad ...(7)$$

In a case where the condition (7) is satisfied, the defect candidate specifying unit 72 specifies that the two defect candidates A and B are at positions substantially identical to each other (S14A). Note that, also in the fourth embodiment, the defect candidate specifying unit 72 assumes that the positions of the defect candidates are at positions substantially identical to each other in the XY cross section in the plurality of layers, and does not consider the position in the Z direction (Z coordinate).

A definition by which the defect candidate specifying unit 72 obtains positions substantially identical to each other of two defect candidates using the condition (7) is referred to as "position definition 2".

After step S14A, or in a case where the defect candidate specifying unit 72 determines that the condition (7) of the overlapping area SAB of the overlapping portion AB and the parameter ε is not satisfied (NO in S13A), the defect candidate specifying unit 72 records the position and the size of the specified defect candidate as defect information in the defect information recording unit 82 (S16), and proceeds to the defect determination processing in step S5 of FIG. 4.

FIG. 19 is a flowchart illustrating an example of a defect determination processing according to the fourth embodiment.

First, the defect detection unit 73 reads defect information including a defect candidate of a layer adjacent in the layering direction (Z direction) from the defect information recording unit 82 (S21), integrates the defect candidate determined to be at positions substantially identical to each other across a plurality of layers (S22A), following the position definition 2 described above, and assigns a defect candidate ID to the corresponding whole integrated defect candidates correspondingly (S23).

Next, the defect detection unit 73 integrates the plurality of defect candidates determined to be at positions substantially identical to each other in the layering direction, and measures the layering direction length (Lz) of integrated defect candidates and the first direction length (Lx) and the second direction length (Ly) in the layer intersecting in the layering direction of integrated defect candidates for the corresponding whole integrated defect candidates. Then, a length of maximum among the first direction length (Lx) and the second direction length (Ly) is set as a maximum layer length (Lxy).

For example, the defect detection unit 73 measures lengths Lx and Ly in the XY direction and a length Lz in the Z direction for the corresponding whole integrated defect candidates (S24). Next, the defect detection unit 73 calculates a longer length among the length Lx in the X direction and the length Ly in the Y direction measured for the corresponding layer as a "maximum layer length Lxy" (S25). Here, processing in which the defect detection unit 73 measures the lengths in the XY direction and the Z direction will be described with reference to FIG. 20.

FIG. 20 is a diagram illustrating an example of measuring lengths in the XY direction and the Z direction of integrated defect candidates.

The defect detection unit 73 assumes integrated defect candidates as one group and measures a length in the XY direction and a length Lz in the Z direction of the defect candidate as a group.

The defect detection unit 73 according to the fourth embodiment assumes integrated defect candidates as one group and measures the length thereof in the XY direction. For example, the defect detection unit 73 measures the length in the Z direction of integrated defect candidates to which the defect candidate ID 1 is assigned as Lz1 and the length in the X direction as the length Lx1 of the entire defect candidates of the (N+1)-th layer and the (N+2)-th layer.

Similarly to the defect candidate of the defect candidate ID 1, the defect detection unit 73 measures the length in the Z direction of integrated defect candidates to which defect candidate ID 2 is assigned as Lz2 and the length in the X direction (from (N+1)-th layer to (N+6)-th layer) as Lx2. In addition, the defect detection unit 73 measures the length in the Z direction of integrated defect candidates to which the defect candidate ID 3 is assigned as Lz3 and the length in the X direction ((N+2) layer to (N+3) layer) as Lx3. In addition, the defect detection unit 73 measures the length in the Z direction of integrated defect candidates to which the defect candidate ID 4 is assigned as Lz4 and the length in the X direction ((N+5) layer to (N+6) layer) as Lx4.

The description returns to FIG. 19.

Next, the defect detection unit 73 compares the length Lz in the Z direction with the maximum layer length Lxy, and sets the longer one as a "maximum length Lmax" (S26A). Next, in a case where the maximum length Lmax exceeds the maximum length threshold δ, the defect detection unit 73 detects integrated defect candidates as defects. Therefore, the defect detection unit 73 determines whether or not the maximum length Lmax exceeds the maximum length threshold δ read from the maximum parameter recording unit 81 (S27A).

In a case of determining that the maximum length Lmax satisfies the following condition (8) exceeding the maximum length threshold δ (YES in S27A), the defect detection unit 73 determines integrated defect candidates as defects (S28), and proceeds to step S6 in FIG. 4.

$$\text{Maximum length Lmax} > \text{Maximum length threshold (8)} \qquad (8)$$

On the other hand, in a case of determining that the above condition (8) that the maximum length Lmax exceeds the maximum length threshold δ is not satisfied (NO in S27A), the defect detection unit 73 does not determine integrated defect candidates as defects, and proceeds to step S6 in FIG. 4.

The above-described defect detection method according to the fourth embodiment is referred to as "detection method 4". The detection method 4 is substantially the same as the detection method 1 according to the first embodiment. However, the difference is that the maximum layer length Lxy is defined as the maximum length in each layer in the detection method 1, whereas the maximum length Lxy in the XY direction is determined by regarding integrated defect candidates as one group in the detection method 4. In addition, the detection method 4 has an advantage that it is easy to create an algorithm because the processing is simpler than the detection methods 1 to 3 according to the first to the third embodiments.

Note that the parameter ε described above may be changed each time PBF-AM is performed, or may be fixed once determined. In addition, the value of the parameter may be changed for each type of powder used in the PBF-AM processing.

[5. Fifth Embodiment]

Next, a defect detection method according to a fifth embodiment of the present invention will be described.

The defect detection method according to the fifth embodiment is performed using the three-dimensional PBF-AM apparatus 1 according to the second embodiment and the control unit 70 and the recording unit 80 in the PC 54.

In the fifth embodiment, the defect detection unit 73 detects integrated defect candidates as defects in a case of determining that the maximum length of integrated defect candidates is a layering direction length (Lz) and the layering direction length (Lz) exceeds the maximum length threshold (δz) in the layering direction, or in a case where a maximum length is the maximum layer length (Lxy) and the maximum layer length (Lxy) exceeds the maximum layer length threshold (δxy) in the layer. Therefore, the maximum layer length threshold δxy and the maximum length threshold δz used by the defect detection unit 73 to determine the defect are recorded in the parameter recording unit 81.

In step S27 (see FIG. 12) of the defect detection method according to the fifth embodiment, in a case where the maximum length is Lz, the defect detection unit 73 compares the maximum length Lz with the threshold δz. Then, in a case of determining that the maximum length Lz is larger than the threshold δz, the defect detection unit 73 proceeds to step S28, and determines integrated defect candidates as defects.

On the other hand, in a case where the maximum length is Lxy (Lx max or Ly max), the defect detection unit 73 compares the maximum length Lxy with the threshold δxy. Then in a case of determining that the maximum length Lxy is larger than the threshold δxy, the defect detection unit 73 proceeds to step S28 and determines integrated defect candidates as defects.

The above-described defect detection method according to the fifth embodiment is referred to as "detection method 5". The detection method 5 is substantially the same as the detection method 2 according to the second embodiment. However, the difference is that the maximum layer length Lxy is defined as the maximum length in each layer in the detection method 2, whereas the maximum length Lxy in the XY direction is determined by regarding integrated defect candidates as one group in the detection method 5.
Note that the parameters $\alpha$, $\beta$, $\gamma$, $\delta z$, and $\delta xy$ described above may be changed for each time PBF-AM is performed, or may be fixed once determined. In addition, the value of the parameter may be changed for each type of powder to use. In addition, the value of the parameter may be changed for each type of powder used in the PBF-AM processing.

[6. Sixth Embodiment]

Next, a defect detection method according to a sixth embodiment of the present invention will be described.
The defect detection method according to the sixth embodiment is performed using the three-dimensional PBF-AM apparatus 1 according to the third embodiment and the control unit 70 and the recording unit 80 in the PC 54.
The defect detection method according to the sixth embodiment is the same as the defect detection method according to the fourth embodiment from step S1 in FIG. 4 to step S25 in FIG. 19. Therefore, also in the defect detection method according to the sixth embodiment, as described with reference to FIG. 20, integrated defect candidates are regarded as one group.
In the sixth embodiment, the defect detection unit 73 prepares a plurality of maximum length thresholds in the layering direction and maximum layer length thresholds in the layers, and detects integrated defect candidates as defects in a case where the maximum layer length in the layer of integrated defect candidates corresponds to a range defined by the maximum layer length thresholds ($\delta z$, $\delta xy$) and the layering direction length of integrated defect candidates exceeds the maximum length threshold associated with the maximum layer length thresholds.
Therefore, the maximum length thresholds $\delta xy$ and $\delta z$ used by the defect detection unit 73 to determine the defect are recorded in the parameter recording unit 81. Further, the maximum length thresholds $\delta z$ and $\delta xy$ are recorded in the parameter recording unit 81 for n+1 combinations (up to $\delta xy_n$ and $\delta z_n+1$). Here, n represents the number of case classification.
For example, in the case of n = 2, five thresholds of $\delta xy_1$, $\delta xy_2$, $\delta z_1$, $\delta z_2$, and $\delta z_3$ are recorded in the parameter recording unit 81. In step S27 of FIG. 12, the defect detection unit 73 performs case classification as follows depending on the size of the maximum layer length Lxy. Then, the defect detection unit 73 selectively uses the maximum length threshold $\delta z$ depending on each case, and determines an integrated defect candidates satisfying any one of the following conditions (6-1) to (6-3) as defects.

(1) In the case of $Lxy \geq \delta xy_1$ and $Lz \geq \delta z_1$, the defect detection unit 73 determines integrated defect candidates as defects....(6-1)
(2) In the case of $\delta xy_1 > Lxy \geq \delta xy_2$, if $Lz \geq \delta z_2$, the defect detection unit 73 determines integrated defect candidates as defects....(6-2)
(3) In the case of $\delta xy_2 > Lxy$, if $Lz \geq 5z_3$, the defect detection unit 73 determines integrated defect candidates as defects....(6-3)

The above-described defect detection method according to the sixth embodiment is referred to as "detection method 6". The detection method 6 is substantially the same as the detection method 3 according to the third embodiment. However, the difference is that the maximum layer length Lxy is defined as the maximum length in each layer in the detection method 3, whereas the maximum length Lxy in the XY direction is determined by regarding integrated defect candidates as one group in the detection method 6.
Note that the parameters $\alpha$, $\beta$, $\gamma$, $\delta xy_1$, ..., $\delta xy_n$, $\delta z_1$, ..., $\delta z_n+1$ described above may be changed each time PBF-AM is performed, or may be fixed once determined. In addition, the value of the parameter may be changed for each type of powder to use. In addition, the value of the parameter may be changed for each type of powder used in the PBF-AM processing.

[7. Seventh Embodiment]

Next, a defect detection method according to a seventh embodiment of the present invention will be described.
The defect detection method according to the seventh embodiment is performed using the three-dimensional PBF-AM apparatus 1 according to the first embodiment and the control unit 70 and the recording unit 80 in the PC 54.
The defect detection method according to the seventh embodiment is the same as the defect detection method according to the first embodiment from step S1 to step S3 in FIG. 4. Here, the defect candidate specifying processing in the defect detection method according to the seventh embodiment will be described with reference to FIG. 21, and the defect determination processing will be described with reference to FIG. 22.

FIG. 21 is a flowchart illustrating an example of the defect candidate specifying processing according to the seventh embodiment.

First, the defect candidate specifying unit 72 specifies the positions of two defect candidates at which at least a part of the XY cross section overlaps on the basis of the layer data obtained from each layer using the conventional method (S11A). Note that the defect candidate specifying unit 72 may specify the positions of two defect candidates at which at least a part of the XY cross section overlaps by the method described in step S11 of FIG. 5 according to the first embodiment.

Next, the defect candidate specifying unit 72 calculates an accuracy index of an overlapping portion among a plurality of defect candidates overlapping in a plurality of layers adjacent in the layering direction. The overlapping portion is a portion where the defect candidate of the N-th layer whose position is specified in the N-th layer and the defect candidate of the (N+1)-th layer whose position is specified in the (N+1)-th layer overlap each other in the layering direction. Here, the defect candidate specifying unit 72 calculates an accuracy index intersection over union (IoU) of an overlapping portion of two defect candidates in an adjacent layer (S12B). Here, the accuracy index IoU of the overlapping portion will be described.

The defect candidate specifying unit 72 assumes that the positions of the defect candidates are at positions substantially identical to each other in the XY cross section in the plurality of layers, and does not consider the position in the Z direction (Z coordinate). Here, attention is paid to the positions of the XY cross section in the plurality of layers, and a region where a plurality of defect candidates overlap in adjacent layers is considered. The defect candidate specifying unit 72 uses the accuracy index IoU for an overlapping state of regions where a plurality of defect candidates overlap in adjacent layers. The accuracy index IoU is one of indices that are often used in the field of machine learning and can be used for object detection.

The accuracy index IoU is an index indicating how much the range predicted by the learned model overlaps with the range determined as a correct answer, and is expressed by the following equation (9).

$$\text{IoU} = \text{portion overlapping/union of two ranges} \quad \ldots(9)$$

The value of the accuracy index IoU is represented between 0 and 1. The larger the value of the accuracy index IoU is, the more accurate the prediction is. For example, referring to FIG. 10, the numerator part of the equation (9) represents the area of the overlapping portion, and the denominator part of the equation (9) represents the value obtained by subtracting the area of the overlapping portion AB from the total area of the defect candidates A and B. Therefore, the larger the accuracy index IoU, the more the images overlap.

Next, in a case where the accuracy index IoU is equal to or larger than an accuracy index threshold value ζ, the defect candidate specifying unit 72 specifies that the defect candidate of the N-th layer and the defect candidate of the (N+1)-th layer are at positions substantially identical to each other. Therefore, the defect candidate specifying unit 72 determines whether or not the following condition (10) indicated by the accuracy index IoU and a parameter ζ is satisfied (S13B).

$$\text{IoU} \geq \zeta, \text{ or } \text{IoU} > \zeta \quad \ldots(10)$$

In a case of determining that the accuracy index IoU and the condition (10) of the parameter ζ are satisfied (YES in S13B), the defect candidate specifying unit 72 specifies that the two defect candidates A and B are at positions substantially identical to each other (S14B).

For example, an accuracy index threshold serving as a threshold of the accuracy index IoU is recorded in the parameter recording unit 81. The accuracy index threshold parameter is represented as ζ. The accuracy index threshold parameter ζ is used as one example of the accuracy index threshold.

In a case where the following condition (10) is satisfied, the defect candidate specifying unit 72 defines that the two defect candidates A and B are at positions substantially identical to each other.

A definition by which the defect candidate specifying unit 72 obtains positions substantially identical to each other of two defect candidates using the condition (10) is referred to as "position definition 3".

After step S14B or in a case of determining that the condition (10) between the accuracy index IoU and the parameter ζ is not satisfied (NO in S13B), the defect candidate specifying unit 72 records the position and the size of the specified defect candidate as defect information in the defect information recording unit 82 (S16), and the processing proceeds to step S5 in FIG. 4.

FIG. 22 is a flowchart illustrating an example of a defect determination processing according to the seventh embodiment.

The defect detection unit 73 reads the defect candidates of the adjacent layers from the defect information recording unit 82 (S21).

Next, the defect detection unit 73 confirms whether the respective defect candidates of the adjacent layers are at positions substantially identical to each other (S29). Whether or not the defect candidates are at positions substantially identical to each other has already been specified in step S14B in FIG. 21, and thus information indicating that the respective defect candidates of the adjacent layers are at positions substantially identical to each other, included in the defect information is confirmed here.

Next, the defect detection unit 73 detects a plurality of defect candidates at positions substantially identical to each other continuously over a layering threshold $\eta$ or a larger value as a defect. Therefore, it is determined whether or not the defect candidates are at positions substantially identical to each other continuously in the $\eta$ layers (S27A). Here also, the positions of the defect candidates are assumed to be at positions substantially identical to each other in the XY cross section, and the position in the Z direction (Z coordinate) is not considered.

In a case where the defect candidates are located at positions substantially identical to each other continuously in the $\eta$ layers (YES in S27A), the defect candidates at positions substantially identical to each other continuously in the $\eta$ layers are determined as a defect (S28A), and the processing proceeds to step S6 in FIG. 4. On the other hand, in a case where the defect candidates are not at positions substantially identical to each other continuously in the $\eta$ layers (NO in S27A), the defect candidates are not determined as a defect, and the processing proceeds to step S6 in FIG. 4. The case where the defect candidates are not at positions substantially identical to each other continuously in the $\eta$ layer includes a case where the defect candidates disappear from positions substantially identical to each other for less than the $\eta$ layers.

The above-described defect detection method according to the seventh embodiment is referred to as "detection method 7". The detection method 7 is different from the detection methods 1 to 6 described so far in the accuracy index IoU and in that the defect candidates are at positions substantially identical to each other continuously in the $\eta$ layers.

Note that the parameters $\zeta$ and $\eta$ described above may be changed for each time PBF-AM is performed, or may be fixed once determined. In addition, the value of the parameter may be changed for each type of powder to use. In addition, the value of the parameter may be changed for each type of powder used in the PBF-AM processing.

[8. Eighth Embodiment]

Next, a defect detection method according to an eighth embodiment of the present invention will be described.

The defect detection method according to the eighth embodiment is performed using the three-dimensional PBF-AM apparatus 1 according to the first embodiment and the control unit 70 and the recording unit 80 in the PC 54. Then, in the defect detection method according to the eighth embodiment, the same processing is performed from step S1 of FIG. 4 to step S25 of FIG. 12 according to the first embodiment. Integrated defect candidates are those illustrated in FIG. 15.

In the eighth embodiment, the defect detection unit 73 prepares a layering direction length threshold Lz_lim and a maximum layer length threshold Lxy_lim used by the defect detection unit 73 to determine a defect. These thresholds are recorded in the parameter recording unit 81. The defect detection unit 73 detects integrated defect candidates as defects in a case where the layering direction length Lz is equal to or larger than the layering direction length threshold Lz_lim and the maximum layer length Lxy equals to or larger than the maximum layer length threshold Lxy_lim. Integrated defect candidates are those illustrated in FIG. 15.

FIG. 23 is a flowchart illustrating an example of a defect determination processing according to the eighth embodiment.

As described above, steps S21 to S25 in FIG. 23 are the same processes as steps S21 to S25 in FIG. 12, and thus a detailed description thereof will be omitted. Note that step S26 in FIG. 12 is deleted.

After step S25, the defect detection unit 73 determines whether or not the length in the Z direction (referred to as layering direction length Lz) of integrated defect candidates measured in step S24 is equal to or larger than the layering direction length threshold Lz_lim read from the parameter recording unit 81 (S27B).

In a case of determining that the layering direction length Lz is equal to or larger than the layering direction length threshold Lz_lim (YES in S27B), the defect detection unit 73 determines whether the maximum layer length Lxy of integrated defect candidates calculated in step S25 is equal to or larger than the maximum layer length threshold Lxy_lim (S27C).

In a case of determining that the maximum layer length Lxy is equal to or larger than the maximum layer length threshold Lxy_lim (YES in S27C), the defect detection unit 73 determines integrated defect candidates as defects (S28) and proceeds to step S6 in FIG. 4.

On the other hand, in a case of determining that the layering direction length Lz is not equal to or larger than the layering direction length threshold Lz_lim (NO in S27B) or that the maximum layer length Lxy is not equal to or larger than the maximum layer length threshold Lxy_lim (NO in S27C), the defect detection unit 73 does not determine that integrated defect candidates as defects and proceeds to step S6 in FIG. 4.

The above-described defect detection method according to the eighth embodiment is referred to as "detection method 8". The detection method 8 is substantially the same as the detection method 1 according to the first embodiment. However, the difference is that in a case where the layering direction length Lz is equal to or larger than the layering direction length threshold Lz_lim and the maximum layer length Lxy is equal to or larger than the maximum layer length threshold Lxy_lim, integrated defect candidates are detected as defects.

Note that the layering direction length threshold Lz_lim and the maximum layer length threshold Lxy_lim described above may be changed each time PBF-AM is performed or may be fixed once determined. In addition, the value of the parameter may be changed for each type of powder used in the PBF-AM processing.

[9. Ninth Embodiment]

Next, a defect detection method according to a ninth embodiment of the present invention will be described.

The defect detection method according to the ninth embodiment is performed using the three-dimensional PBF-AM apparatus 1 according to the first embodiment and the control unit 70 and the recording unit 80 in the PC 54. Then, in the defect detection method according to the ninth embodiment, the same processing is performed from step S1 of FIG. 4 to step S25 of FIG. 12 according to the first embodiment.

In the ninth embodiment, the defect detection unit 73 prepares a layering direction length threshold Lz_lim and a maximum layer length threshold Lxy_lim used by the defect detection unit 73 to determine a defect. These thresholds are recorded in the parameter recording unit 81. The defect detection unit 73 detects integrated defect candidates as defects in a case where the layering direction length Lz is equal to or larger than the layering direction length threshold Lz_lim, or the maximum layer length Lxy is equal to or larger than the maximum layer length threshold Lxy_lim. Integrated defect candidates are those illustrated in FIG. 15.

FIG. 24 is a flowchart illustrating an example of a defect determination processing according to the ninth embodiment.

As described above, steps S21 to S25 in FIG. 24 are the same processes as steps S21 to S25 in FIG. 12, and thus a detailed description thereof will be omitted. Note that step S26 in FIG. 12 is deleted.

After step S25, the defect detection unit 73 determines whether or not the length in the Z direction (referred to as layering direction length Lz) of integrated defect candidates measured in step S24 is equal to or larger than the layering direction length threshold Lz_lim read from the parameter recording unit 81 (S27B).

In a case of determining that the layering direction length Lz is equal to or larger than the layering direction length threshold Lz_lim (YES in S27B), the defect detection unit 73 determines that integrated defect candidates are defective (S28) and proceeds to step S6 in FIG. 4.

On the other hand, in a case of determining that the layering direction length Lz does not equals to or is larger than the layering direction length threshold Lz_lim (NO in S27B), the defect detection unit 73 determines whether or not the maximum layer length Lxy of integrated defect candidates calculated in step S25 is equal to or larger than the maximum layer length threshold Lxy_lim (S27C).

In a case of determining that the maximum layer length Lxy is equal to or larger than the maximum layer length threshold Lxy_lim (YES in S27C), the defect detection unit 73 determines integrated defect candidates as defects (S28) and proceeds to step S6 in FIG. 4.

On the other hand, in a case of determining that the maximum layer length Lxy is not equal to or larger than the maximum layer length threshold Lxy_lim (NO in S27 C), the defect detection unit 73 does not determine integrated defect candidates as defects, and proceeds to step S6 in FIG. 4.

The above-described defect detection method according to the ninth embodiment is referred to as "detection method 9". The detection method 9 is substantially the same as the detection method 1 according to the first embodiment. However, the difference is that in a case where the layering direction length Lz is equal to or larger than the layering direction length threshold Lz_lim, or the maximum layer length Lxy is equal to or larger than the maximum layer length threshold Lxy_lim, integrated defect candidates are detected as defects.

Note that the layering direction length threshold Lz_lim and the maximum layer length threshold Lxy_lim described above may be changed each time PBF-AM is performed or may be fixed once determined. In addition, the value of the parameter may be changed for each type of powder used in the PBF-AM processing.

[10. Modification]

The position definitions 1 to 3 have been described as the definition of the overlapping state of the defect candidates. In addition, the detection methods 1 to 9 have been described with respect to the detection method after the position definition is completed. The combination of the position definitions 1 to 3 and the detection methods 1 to 9 is not necessarily limited to the combination of the first to the ninth embodiments, and may be freely combined and used.

In addition, although various parameters are used in the first to the ninth embodiments, these parameters may be changed depending on the layer. For example, in the first embodiment, four kinds of parameters $\alpha$, $\beta$, $\gamma$, and $\delta$ have been described. Among these four types of parameters, the maximum length threshold $\delta$ can be set to $\delta = 5$ for up to 100 to 200 layers, $\delta = 10$ for up to 201 to 300 layers, and the like.

Appropriate values of these parameters may vary depending on the shape of the manufactured object 38. In such a case, it is expected that the defect detection accuracy is further improved by changing these parameters depending on the layer.

In each of the embodiments described above, an example in which the present invention is applied to the manufacturing control software dedicated to manufacturing used in the powder bed type three-dimensional PBF-AM apparatus has been described. However, it is not necessary to limit the manufacturing beam to an electron beam method, and the present invention may be applied to manufacturing control software of a manufacturing apparatus including other methods such as a laser method.

In addition, in each of the embodiments described above, it has been described that the defect candidates specified and the detected defect in the BSE monitor 55 are displayed as a BSE image, but the defect candidates and the BSE image may be displayed as a camera image photographed by the camera 42.

In addition, in each of the embodiments described above, the defect candidates are specified and the defect detection is performed during the PBF-AM processing, but the defect candidates may be specified and the defect detection may be performed after the end of the PBF-AM processing.

That is, the defect candidate specifying unit 72 and the defect detection unit 73 can operate either in the middle of the processing of PBF-AM or after the processing of PBF-AM.

In addition, since the accuracy of defect detection is enhanced by the detection method in each of the embodiments described above, a step of further performing, for example, an X-ray computed tomography (CT) inspection on the manufactured object 38 can be omitted.

In addition, in each of the embodiments described above, the PBF-AM processing may be stopped for a manufactured object containing a defect detected during the PBF-AM processing. Alternatively, if a plurality of components are collectively subjected to PBF-AM, the PBF-AM processing may be stopped only for a manufactured object containing a defect, and the PBF-AM processing may be continued for a manufactured object containing another defect.

Note that the present invention is not limited to the embodiments described above, and it is reasonable that various other application examples and modifications can be taken without departing from the present invention described in the claims.

For example, each of the embodiments described above describes the configurations of the three-dimensional powder bed fusion additive manufacturing (PBF-AM) apparatus 1 and the manufacturing control software of the PC 54 in detail and specifically in order to describe the present invention in an easy-to-understand manner, and it is not necessarily limited to those having all the described configurations. In addition, a part of the configurations of the embodiments described here can be replaced with a configuration of another embodiment, and furthermore, a configuration of another embodiment can be added to a configuration of a certain embodiment. In addition, it is also possible to add, delete, and replace other configurations for a part of a configuration of each embodiment.

In addition, the control lines and the information lines indicate what is considered to be necessary for the description, and do not necessarily indicate all the control lines and the information lines on the product. In practice, it may be considered that almost all the configurations are connected to each other.

Reference Signs List

| | |
|---|---|
| 1 | Three-dimensional powder bed fusion additive manufacturing apparatus |
| 2 | Beam irradiation device |
| 15 | Electron beam |
| 18 | Build table |
| 32 | Powder material |
| 35 | Pre-sintered body |
| 38 | Manufactured object |
| 42 | Camera |
| 46 | Detection unit |
| 54 | PC |
| 55 | BSE monitor |
| 60 | Input unit |
| 70 | Control unit |
| 71 | Manufacturing control unit |

72 Defect candidate specifying unit
73 Defect detection unit
74 Display control unit
80 Recording unit
81 Parameter recording unit
82 Defect information recording unit
90 Display unit

## Claims

1. An information processing apparatus comprising:

a defect candidate specifying unit (72) configured to detect, on a basis of layer data obtained for a corresponding layer on which a manufactured object is manufactured by powder bed fusion additive manufacturing (PBF-AM), a defective portion generated in the layer as a defect candidate for the corresponding layer and specify a plurality of the defect candidates at positions substantially identical to each other in a plurality of the layers adjacent in a layering direction; and
a defect detection unit (73) configured to detect, on the basis of a size in the layering direction and a size in the layer of the plurality of defect candidates at positions substantially identical to each other specified in the plurality of layers, a defect remaining in the manufactured object.

2. The information processing apparatus according to claim 1, wherein
the defect candidate specifying unit (72) measures, among the plurality of defect candidates overlapping in the plurality of layers adjacent in the layering direction, an area of a defect candidate of an N-th layer (N is an integer of 1 or more) specified by the N-th layer and an area of a defect candidate of an (N+1)-th layer specified by the (N+1)-th layer, calculates an overlapping area of an overlapping portion where the defect candidate of the N-th layer and the defect candidate of the (N+1)-th layer overlap in the layering direction, and specifies, in a case where a ratio of the overlapping area to the area of the defect candidate of the N-th layer is equal to or larger than a first area threshold and a ratio of the overlapping area to the area of the defect candidate of the (N+1)-th layer is equal to or larger than a second area threshold, that the defect candidate of the N-th layer and the defect candidate of the (N+1)-th layer are at the positions substantially identical to each other.

3. The information processing apparatus according to claim 2, wherein
the defect detection unit (73) integrates the plurality of defect candidates being at positions substantially identical to each other in the layering direction, and measures a layering direction length (Lz) of the integrated defect candidates and a first direction length (Lx) and a second direction length (Ly) in the layer intersecting the layering direction of the integrated defect candidates for the corresponding layer, and sets a length of maximum among the first direction length (Lx) and the second direction length (Ly) as a maximum layer length (Lxy) .

4. The information processing apparatus according to claim 3, wherein
the defect detection unit (73) sets a longer length among the layering direction length (Lz) and the maximum layer length (Lxy) as a maximum length, and detects the integrated defect candidates as the defect in a case where the maximum length exceeds a maximum length threshold.

5. The information processing apparatus according to claim 3, wherein
the defect detection unit (73) sets a longer length among the layering direction length (Lz) and the maximum layer length (Lxy) as a maximum length, and detects the integrated defect candidates as the defect in a case where the maximum length is the layering direction length (Lz) and the layering direction length (Lz) exceeds a maximum length threshold in the layering direction, or the maximum length is the maximum layer length (Lxy) and the maximum layer length (Lxy) exceeds a maximum layer length threshold in the layer.

6. The information processing apparatus according to claim 3, wherein
the defect detection unit (73) prepares a plurality of the maximum length thresholds in the layering direction and the maximum layer length thresholds in the layers, and detects the integrated defect candidates as the defect in a case where the maximum layer length (Lxy) in the layer corresponds to a range defined by the maximum layer length threshold and the layering direction length (Lz) exceeds the maximum length threshold associated with the maximum layer length thresholds.

7. The information processing apparatus according to claim 1, wherein the defect candidate specifying unit (72) measures, among the plurality of defect candidates overlapping in the plurality of layers adjacent in the layering direction, an area of a defect candidate of an N-th layer (N is integer of 1 or more) specified by the N-th layer and an area of a defect candidate of an (N+1)-th layer specified by the (N+1)-th layer, calculates an overlapping area of an overlapping portion where the defect candidate of the N-th layer and the defect candidate of the (N+1)-th layer overlap in the layering direction, and specifies, in a case where the overlapping area is equal to or larger than an overlapping portion area threshold, that the defect candidate of the N-th layer and the defect candidate of the (N+1)-th layer are at the positions substantially identical to each other.

8. The information processing apparatus according to claim 2, wherein the defect detection unit (73) integrates the plurality of defect candidates being at the positions substantially identical to each other in the layering direction, and measures a layering direction length (Lz) of the integrated defect candidates and a first direction length (Lx) and a second direction length (Ly) in the layer intersecting the layering direction of the integrated defect candidates for a whole of the integrated defect candidates correspondingly, and sets a length of maximum among the first direction length (Lx) and the second direction length (Ly) as a maximum layer length (Lxy).

9. The information processing apparatus according to claim 8, wherein the defect detection unit (73) sets a longer length among the layering direction length (Lz) and the maximum layer length (Lxy) of the integrated defect candidates as a maximum length, and detects the integrated defect candidates as the defect in a case where the maximum length exceeds a maximum length threshold.

10. The information processing apparatus according to claim 8, wherein the defect detection unit (73) sets a longer length among the layering direction length (Lz) and the maximum layer length (Lxy) as a maximum length, and detects the integrated defect candidates as the defect in a case where the maximum length of the integrated defect candidate is the layering direction length (Lz) and the layering direction length (Lz) exceeds a maximum length threshold in the layering direction, or the maximum length is the maximum layer length (Lxy) and the maximum layer length (Lxy) exceeds a maximum layer length threshold in the layer.

11. The information processing apparatus according to claim 3, wherein the defect detection unit (73) prepares a plurality of the maximum length thresholds in the layering direction and the maximum layer length thresholds in the layers, and detects the integrated defect candidates as the defect in a case where the maximum layer length (Lxy) in the layer of the integrated defect candidates corresponds to a range defined by the maximum layer length threshold and the layering direction length (Lz) of the integrated defect candidates exceeds the maximum length threshold associated with the maximum layer length thresholds.

12. The information processing apparatus according to claim 1, wherein the defect candidate specifying unit (72) calculates, among the plurality of defect candidates overlapping in the plurality of layers adjacent in the layering direction, an accuracy index of an overlapping portion in which an N-th layer defect candidate specified by an N-th layer (N is integer of 1 or more) and an (N+1)-th layer defect candidate specified by an (N+1)-th layer overlap in the layering direction, and specifies, in a case where the accuracy index equal to or larger than an accuracy index threshold, that the defect candidate of the N-th layer and the defect candidate of the (N+1)-th layer are at the positions substantially identical to each other.

13. The information processing apparatus according to claim 12, wherein the defect detection unit (73) detects the plurality of defect candidates being at the positions substantially identical to each other continuously over a plurality of layers equal to or larger than the layering threshold as defects.

14. The information processing apparatus according to claim 3, wherein the defect detection unit (73) prepares a layering direction length threshold and a maximum layer length threshold in the layers, and detects the integrated defect candidates as the defect in a case where the layering direction length (Lz) of the integrated defect candidates is equal to or larger than the layering direction length threshold, and the maximum layer length (Lxy) in the layer of the integrated defect candidates is equal to or larger than the maximum layer length threshold.

15. The information processing apparatus according to claim 3, wherein the defect detection unit (73) prepares a layering direction length threshold and a maximum layer length threshold in the layers, and detects the integrated defect candidates as the defect in a case where the layering direction length (Lz) of the integrated defect candidates is equal to or larger than the layering direction length threshold, or the maximum layer length (Lxy) in the layer of the integrated defect candidates is equal to or larger than the maximum layer length threshold.

**16.** The information processing apparatus according to any one of claims 1 to 15, wherein
processing of the defect candidate specifying unit (72) and processing of the defect detection unit (73) are executed in a middle of PBF-AM processing or after the PBF-AM processing.

**17.** A defect detection method performed by a defect candidate specifying unit (72) and a defect detection unit (73) included in an information processing apparatus, the defect detection method comprising:

a step in which, on a basis of layer data obtained for a corresponding layer on which a manufactured object is manufactured by powder bed fusion additive manufacturing (PBF-AM), the defect candidate specifying unit (72) configured to detect a defective portion generated in the layer as a defect candidate for the corresponding layer and specify a plurality of the defect candidates at positions substantially identical to each other in a plurality of the layers adjacent in a layering direction; and
a step in which the defect detection unit (73) configured to detect, on the basis of a size in the layering direction and a size in the layer of the plurality of defect candidates at the positions substantially identical to each other specified in the plurality of layers, a defect remaining in the manufactured object.

**18.** A three-dimensional powder bed fusion additive manufacturing (PBF-AM) apparatus comprising:

a build plate (22) on which a powder bed, a powder material being spread over the powder bed, is formed,
a powder feeding system (16) configured to spread the powder material over the powder bed,
a beam irradiation part (2) configured to irradiate the powder material spread over the powder bed with a manufacturing beam,
an electron optical system configured to perform scanning with the manufacturing beam in accordance with a melting condition under which the powder material is fused and fuse the powder material spread over the powder bed,
a defect candidate specifying unit (72) configured to detect, from layer data obtained for a corresponding layer in which a manufactured object is manufactured by PBF-AM, a defective portion where a sintering defect occurs as a defect candidate for the corresponding layer and specify a plurality of the defect candidates at positions substantially identical to each other in a plurality of the layers adjacent in a layering direction; and
a defect detection unit (73) configured to detect, on the basis of a size in the layering direction and a size in the layer of the plurality of defect candidates at the positions substantially identical to each other specified in the plurality of layers, a defect remaining in the manufactured object.

FIG. 1

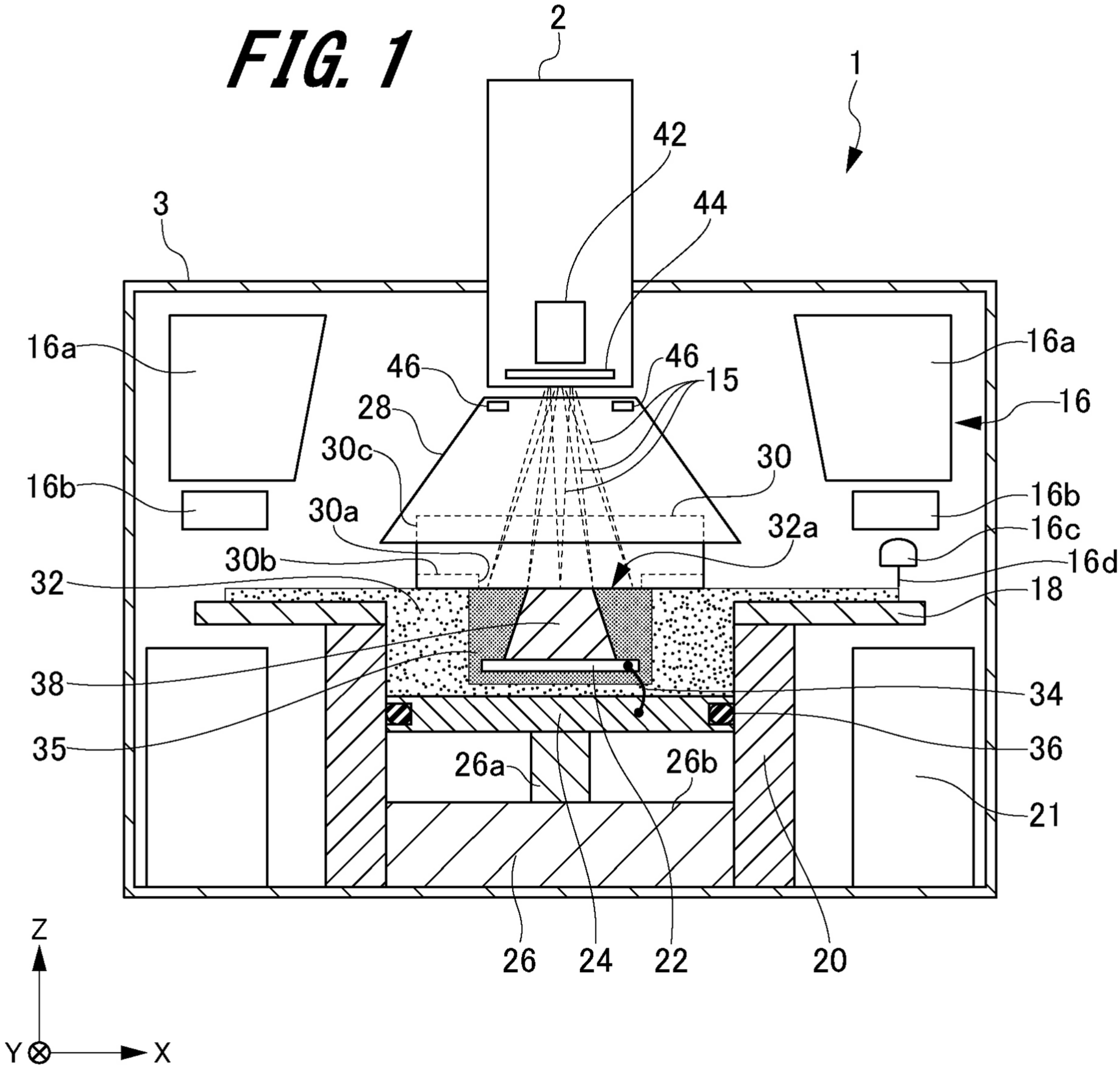

2
1
42
3
44
16a
46
46
15
16a
28
16
30c
30
16b
16b
30a
32a
16c
30b
16d
32
18
38
34
35
36
26a
26b
21
26
24
22
20
Z
Y
X

FIG. 2

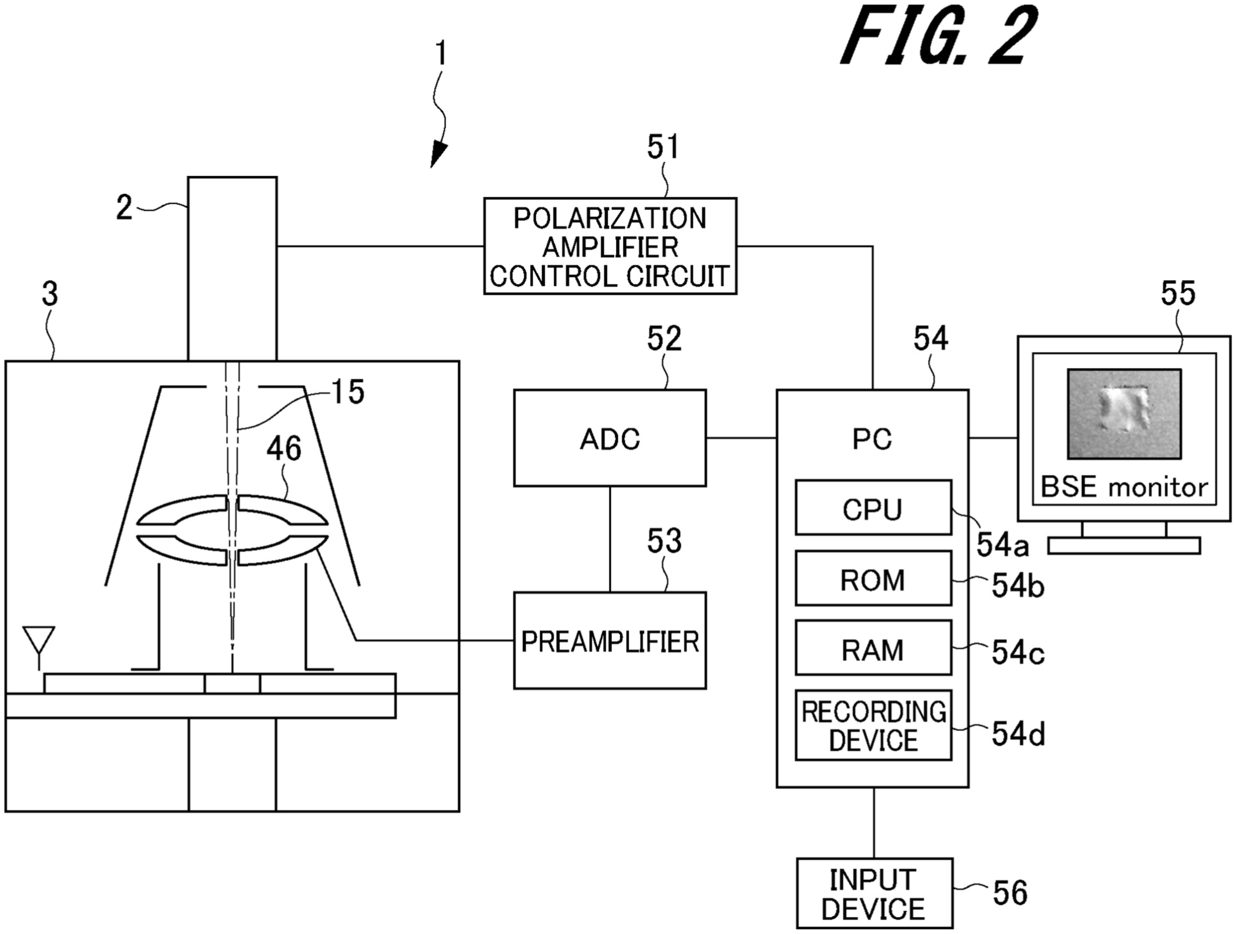
1
2
3
15
46
51
POLARIZATION AMPLIFIER CONTROL CIRCUIT
52
ADC
53
PREAMPLIFIER
54
PC
CPU
54a
ROM
54b
RAM
54c
RECORDING DEVICE
54d
55
BSE monitor
INPUT DEVICE
56

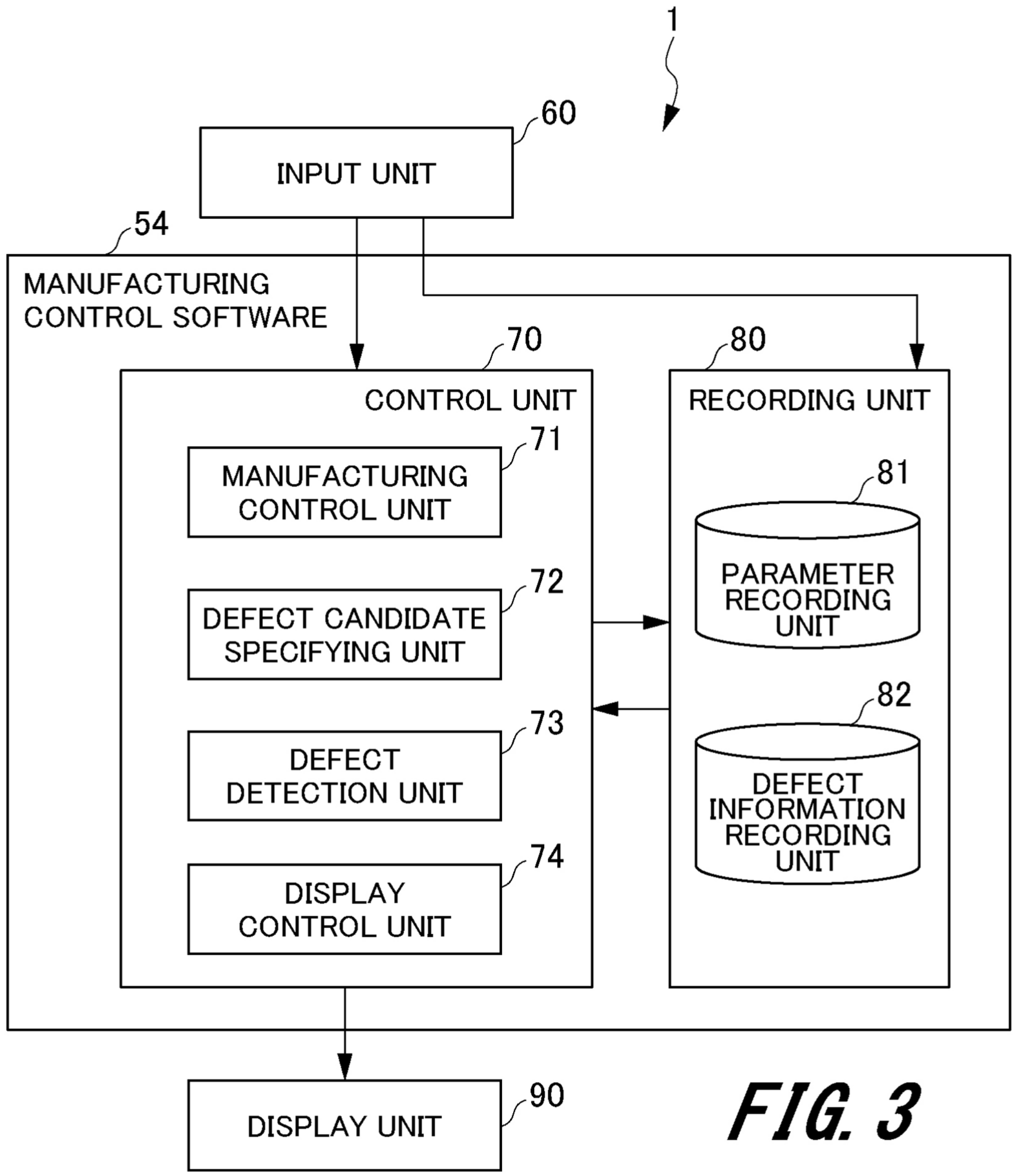
1
60
INPUT UNIT
54
MANUFACTURING
CONTROL SOFTWARE
70
CONTROL UNIT
71
MANUFACTURING
CONTROL UNIT
72
DEFECT CANDIDATE
SPECIFYING UNIT
73
DEFECT
DETECTION UNIT
74
DISPLAY
CONTROL UNIT
80
RECORDING UNIT
81
PARAMETER
RECORDING
UNIT
82
DEFECT
INFORMATION
RECORDING
UNIT
90
DISPLAY UNIT

FIG. 3

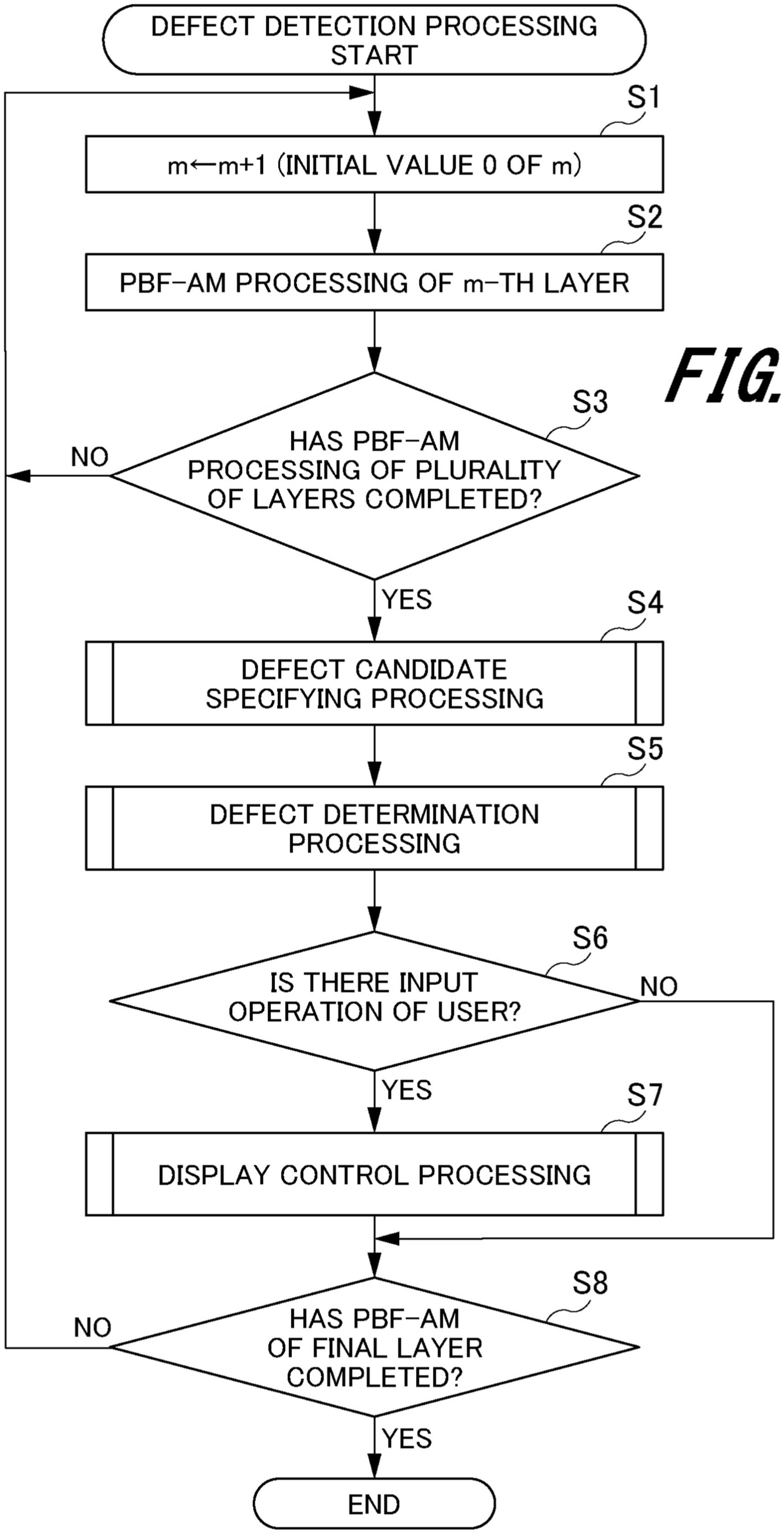
DEFECT DETECTION PROCESSING START
S1
m←m+1 (INITIAL VALUE 0 OF m)
S2
PBF-AM PROCESSING OF m-TH LAYER
S3
HAS PBF-AM PROCESSING OF PLURALITY OF LAYERS COMPLETED?
NO
YES
S4
DEFECT CANDIDATE SPECIFYING PROCESSING
S5
DEFECT DETERMINATION PROCESSING
S6
IS THERE INPUT OPERATION OF USER?
NO
YES
S7
DISPLAY CONTROL PROCESSING
S8
HAS PBF-AM OF FINAL LAYER COMPLETED?
NO
YES
END

FIG. 4

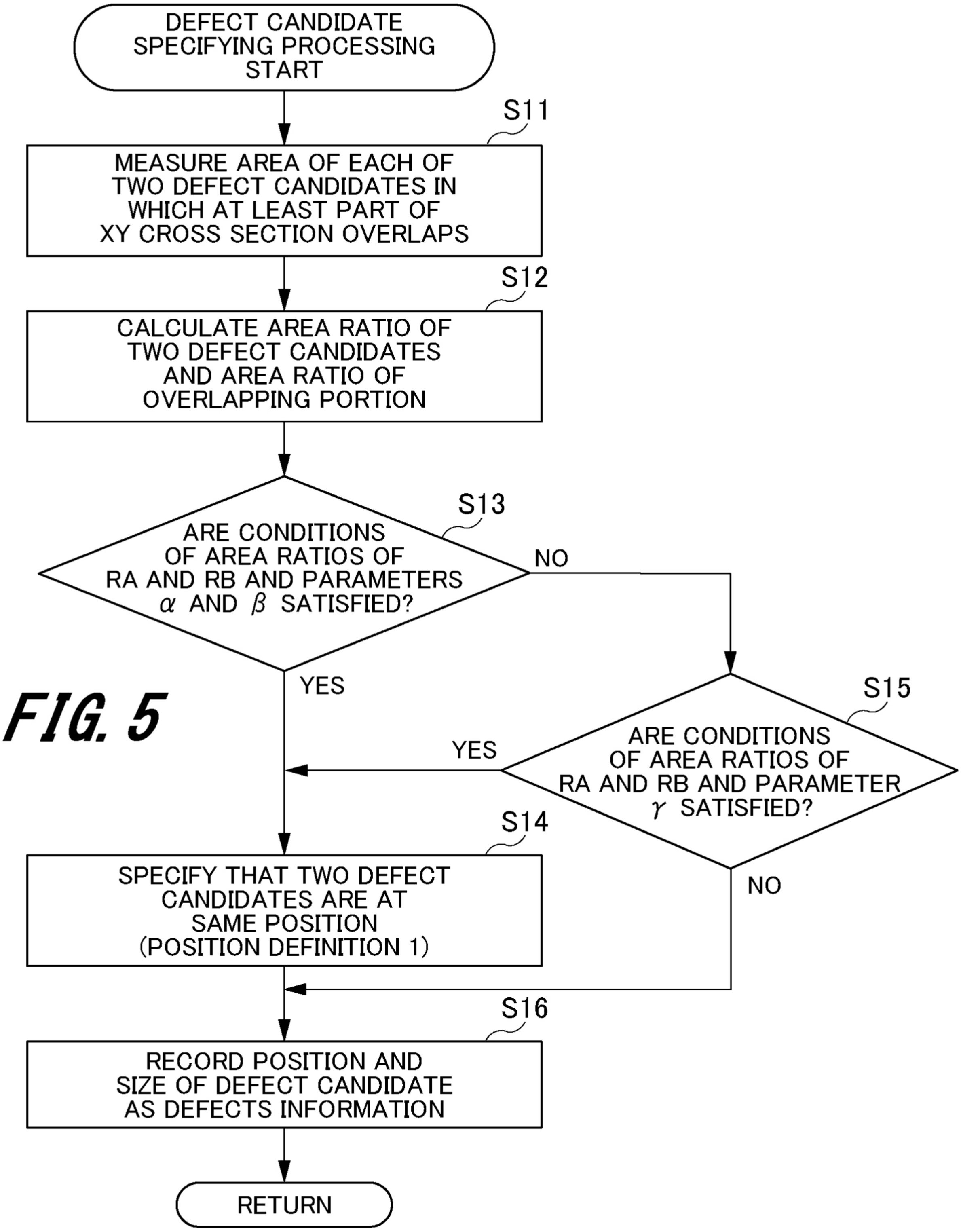
DEFECT CANDIDATE SPECIFYING PROCESSING START
S11
MEASURE AREA OF EACH OF TWO DEFECT CANDIDATES IN WHICH AT LEAST PART OF XY CROSS SECTION OVERLAPS
S12
CALCULATE AREA RATIO OF TWO DEFECT CANDIDATES AND AREA RATIO OF OVERLAPPING PORTION
S13
ARE CONDITIONS OF AREA RATIOS OF RA AND RB AND PARAMETERS α AND β SATISFIED?
NO
YES
S15
ARE CONDITIONS OF AREA RATIOS OF RA AND RB AND PARAMETER γ SATISFIED?
YES
NO
S14
SPECIFY THAT TWO DEFECT CANDIDATES ARE AT SAME POSITION (POSITION DEFINITION 1)
S16
RECORD POSITION AND SIZE OF DEFECT CANDIDATE AS DEFECTS INFORMATION
RETURN

FIG. 5

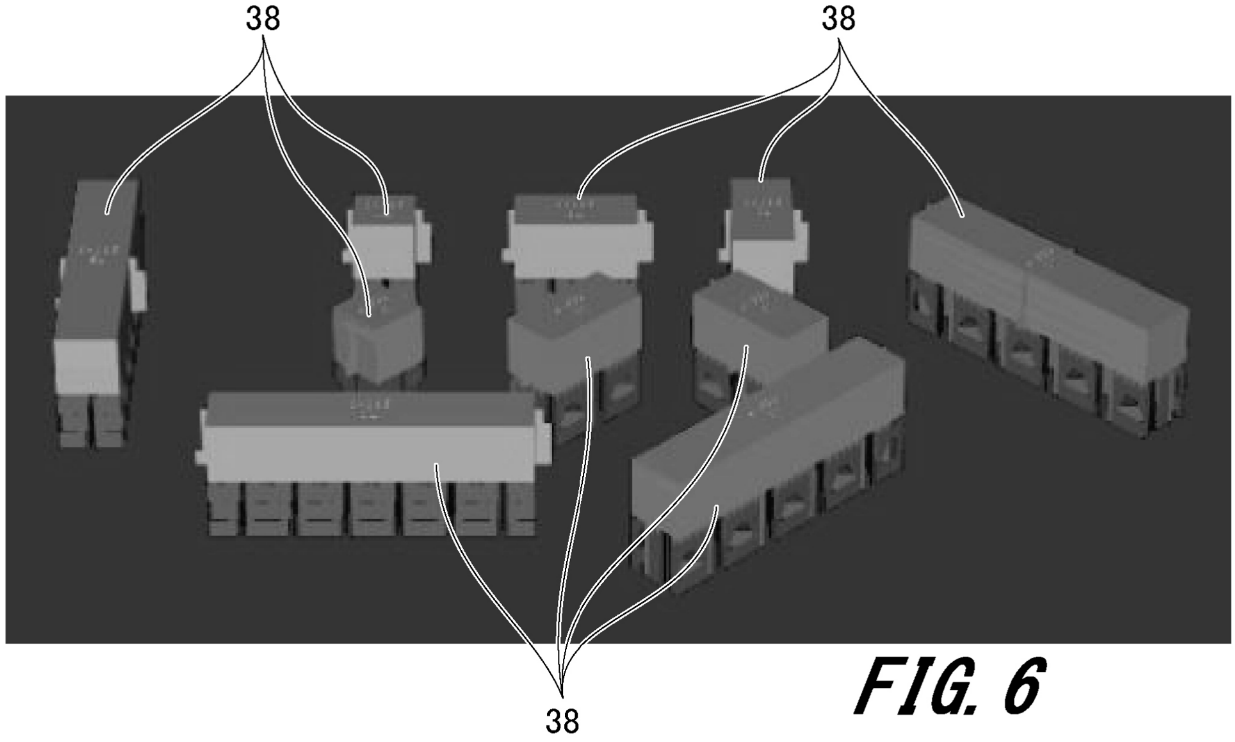


FIG. 6

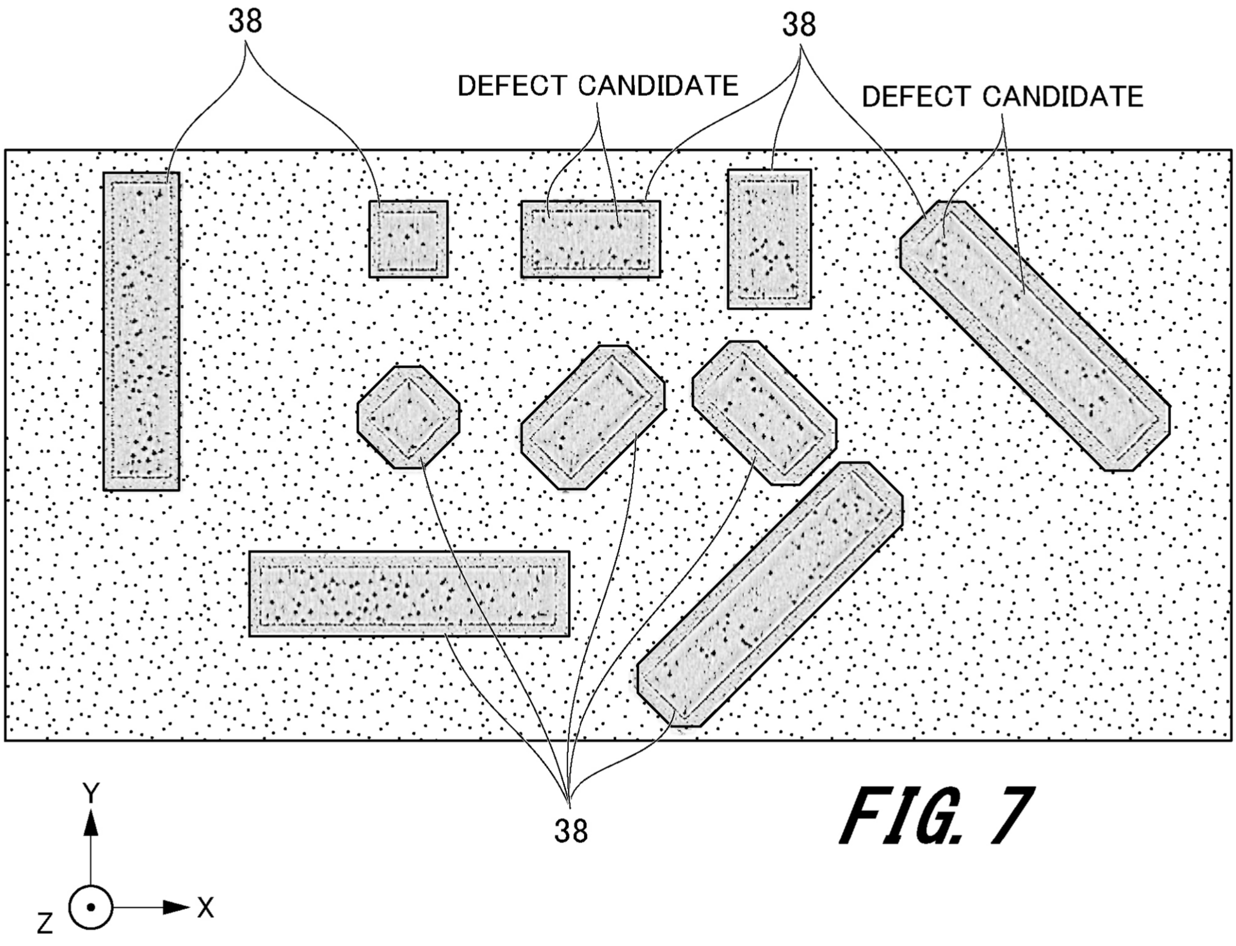


FIG. 7

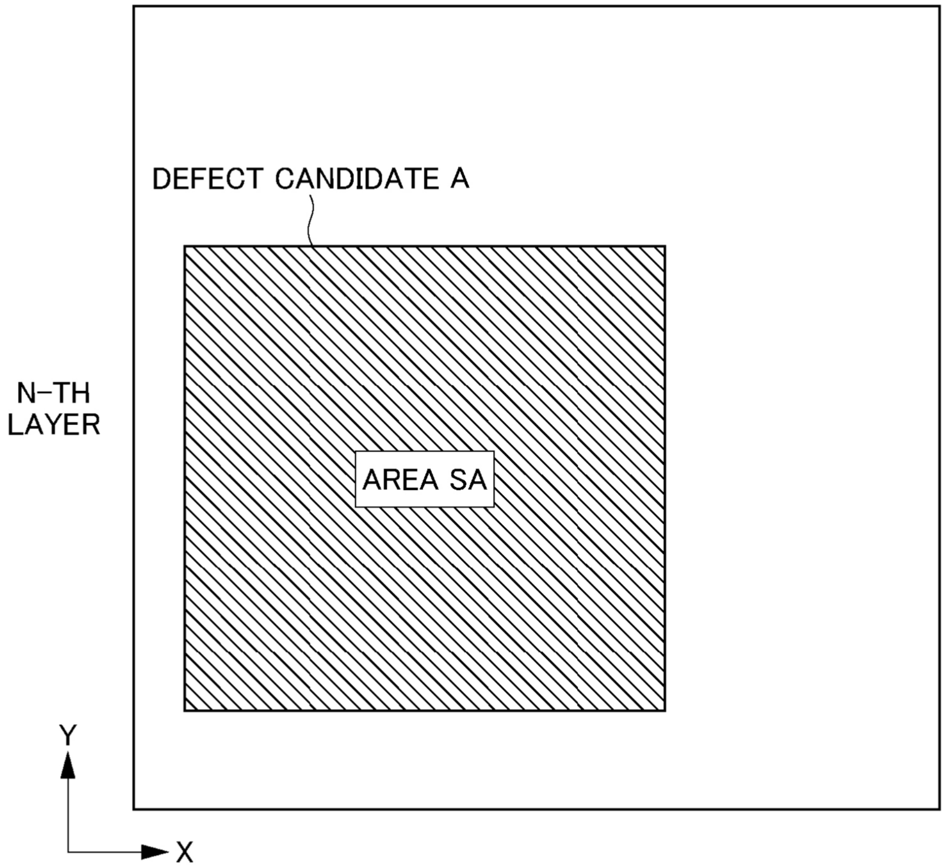
DEFECT CANDIDATE A
N-TH
LAYER
AREA SA
Y
X

FIG. 8

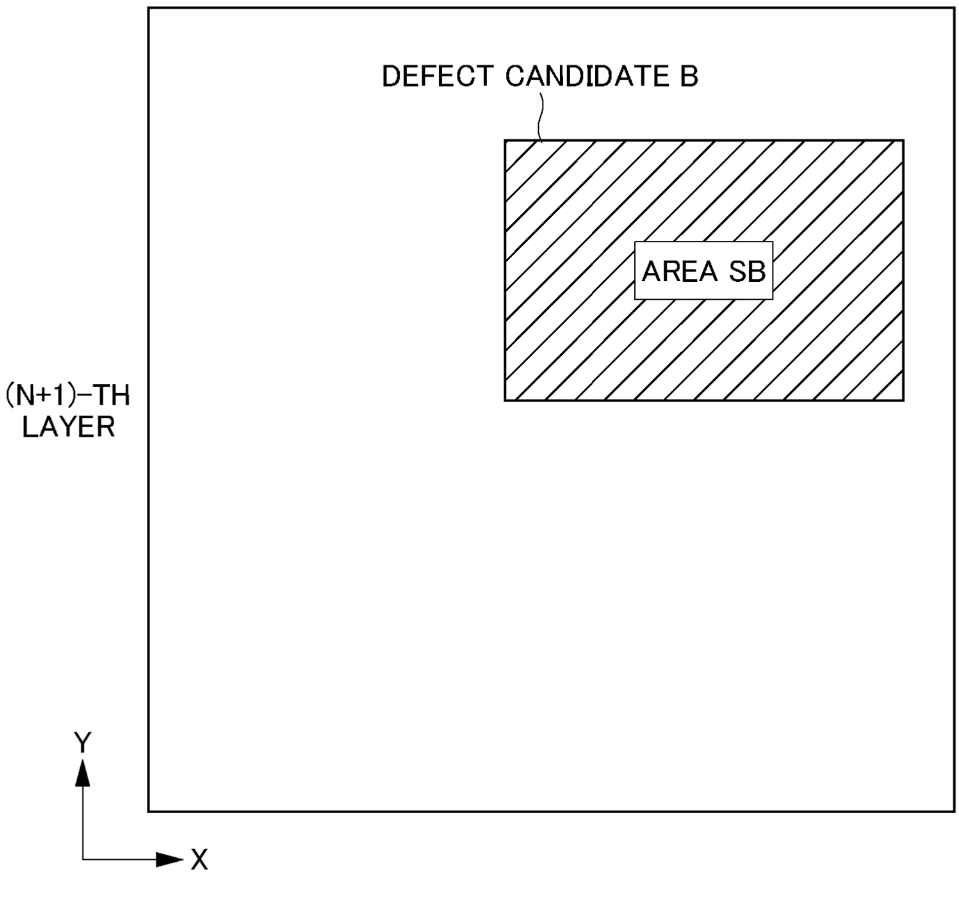
DEFECT CANDIDATE B
AREA SB
(N+1)-TH
LAYER
Y
X

FIG. 9

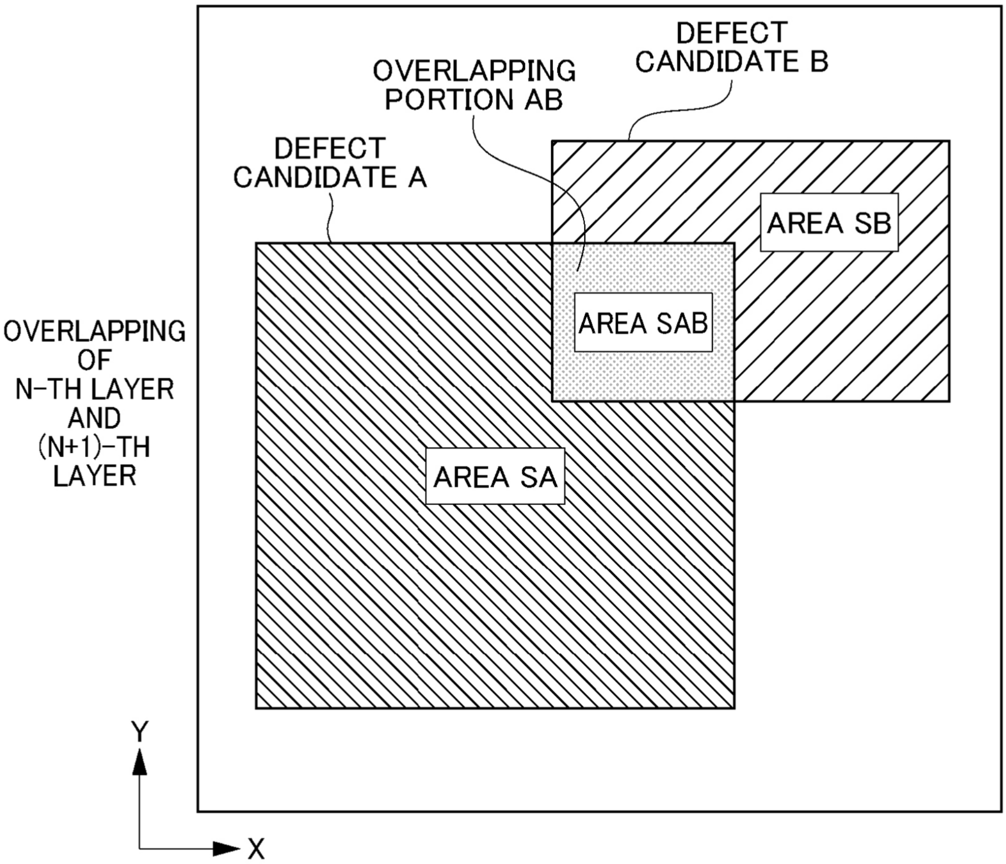
DEFECT
CANDIDATE B
OVERLAPPING
PORTION AB
DEFECT
CANDIDATE A
AREA SB
AREA SAB
OVERLAPPING
OF
N-TH LAYER
AND
(N+1)-TH
LAYER
AREA SA
Y
X

FIG. 10

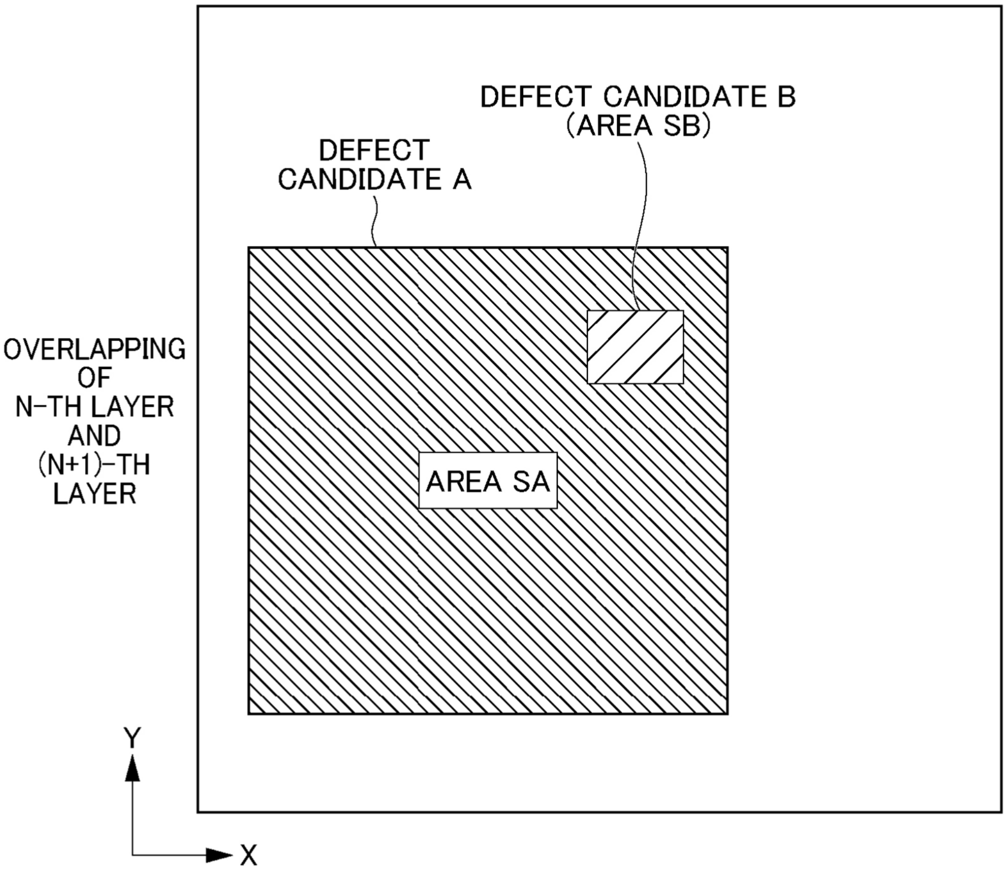
DEFECT CANDIDATE B
(AREA SB)
DEFECT
CANDIDATE A
OVERLAPPING
OF
N-TH LAYER
AND
(N+1)-TH
LAYER
AREA SA
Y
X

FIG. 11

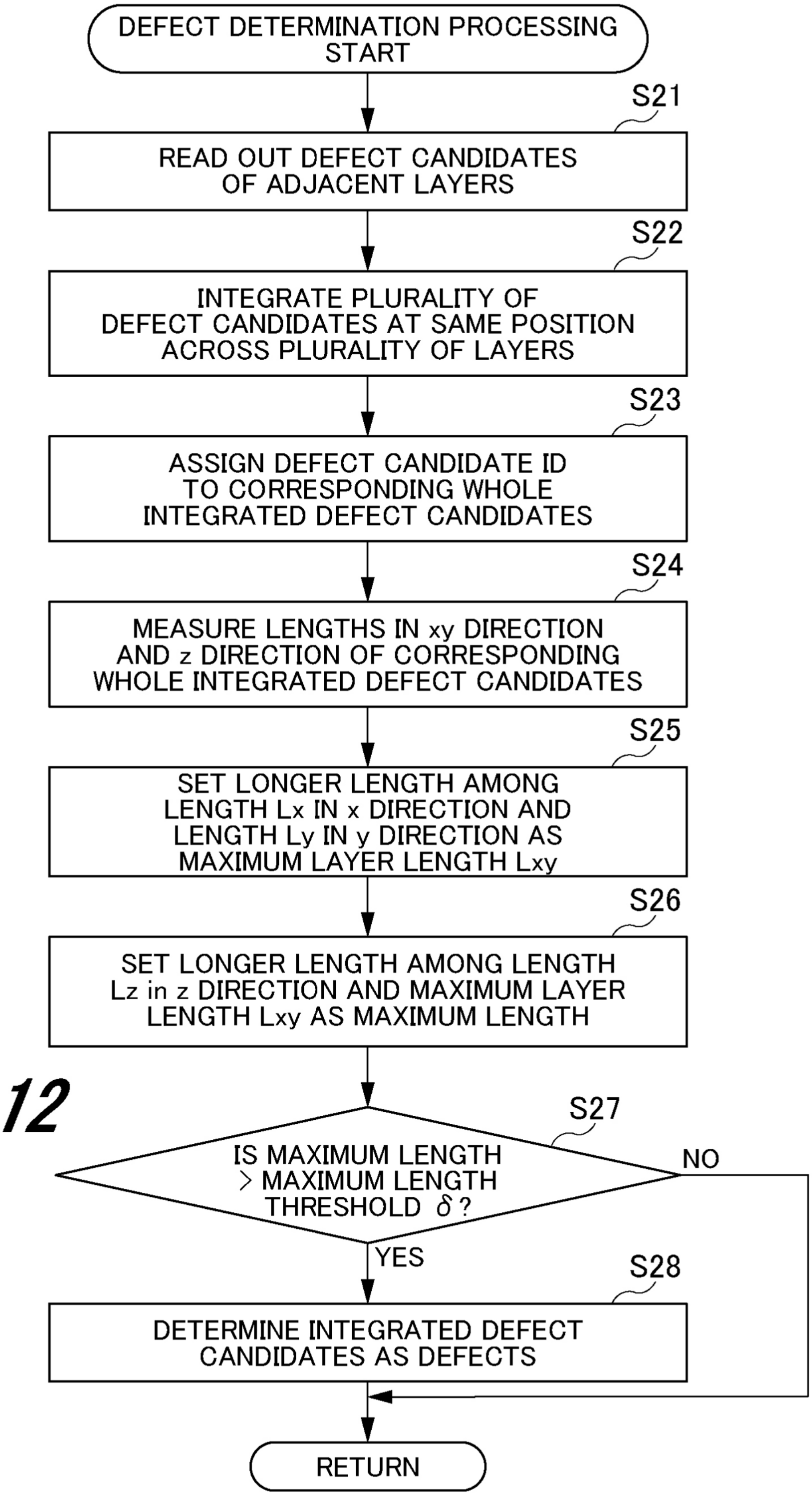
DEFECT DETERMINATION PROCESSING START
S21
READ OUT DEFECT CANDIDATES OF ADJACENT LAYERS
S22
INTEGRATE PLURALITY OF DEFECT CANDIDATES AT SAME POSITION ACROSS PLURALITY OF LAYERS
S23
ASSIGN DEFECT CANDIDATE ID TO CORRESPONDING WHOLE INTEGRATED DEFECT CANDIDATES
S24
MEASURE LENGTHS IN xy DIRECTION AND z DIRECTION OF CORRESPONDING WHOLE INTEGRATED DEFECT CANDIDATES
S25
SET LONGER LENGTH AMONG LENGTH Lx IN x DIRECTION AND LENGTH Ly IN y DIRECTION AS MAXIMUM LAYER LENGTH Lxy
S26
SET LONGER LENGTH AMONG LENGTH Lz in z DIRECTION AND MAXIMUM LAYER LENGTH Lxy AS MAXIMUM LENGTH
S27
IS MAXIMUM LENGTH > MAXIMUM LENGTH THRESHOLD δ?
NO
YES
S28
DETERMINE INTEGRATED DEFECT CANDIDATES AS DEFECTS
RETURN

FIG. 12

FIG. 13

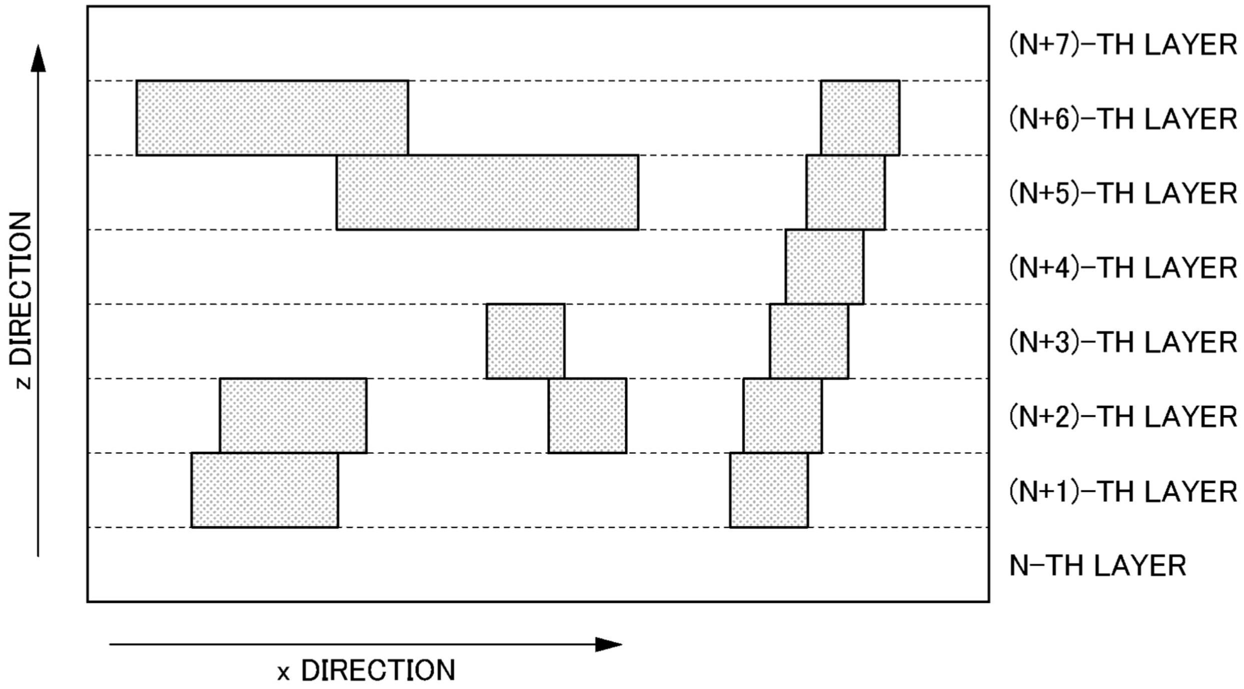
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
z DIRECTION
x DIRECTION

FIG. 14

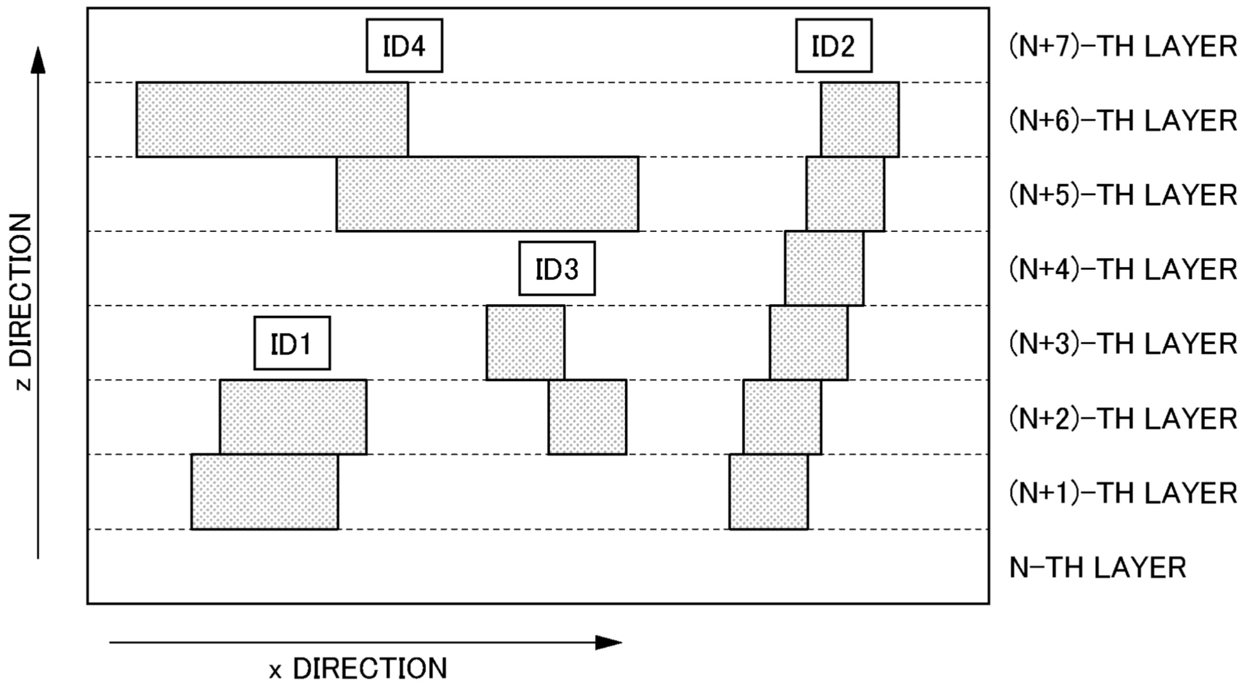
ID4
ID2
ID3
ID1
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
z DIRECTION
x DIRECTION

FIG. 15

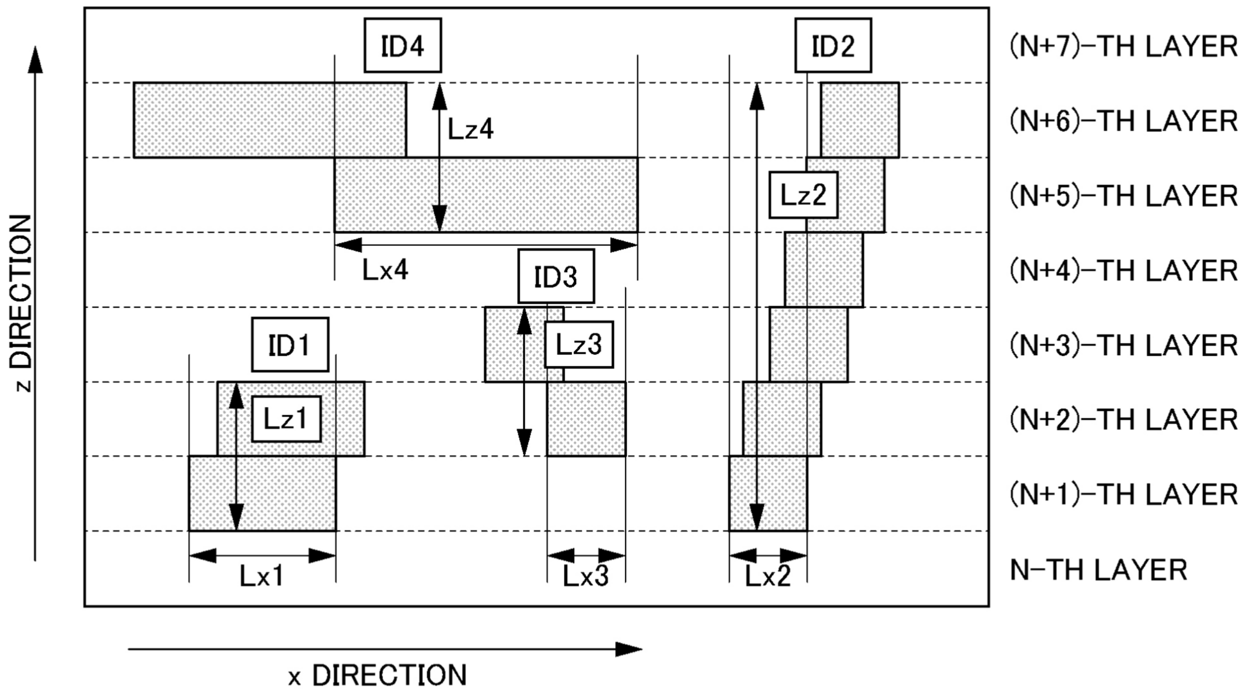
ID4
ID2
Lz4
Lz2
Lx4
ID3
ID1
Lz3
Lz1
Lx1
Lx3
Lx2
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
z DIRECTION
x DIRECTION

FIG. 16

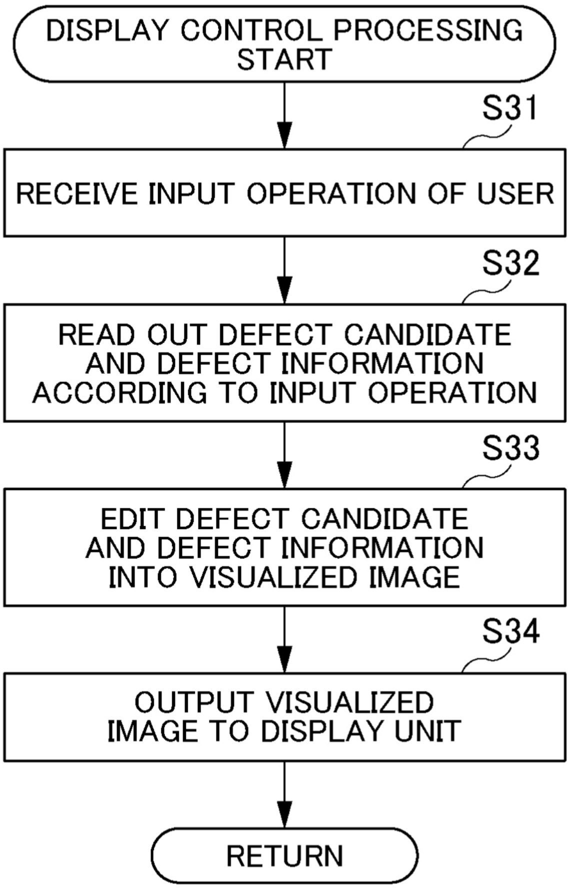
DISPLAY CONTROL PROCESSING START
S31
RECEIVE INPUT OPERATION OF USER
S32
READ OUT DEFECT CANDIDATE AND DEFECT INFORMATION ACCORDING TO INPUT OPERATION
S33
EDIT DEFECT CANDIDATE AND DEFECT INFORMATION INTO VISUALIZED IMAGE
S34
OUTPUT VISUALIZED IMAGE TO DISPLAY UNIT
RETURN

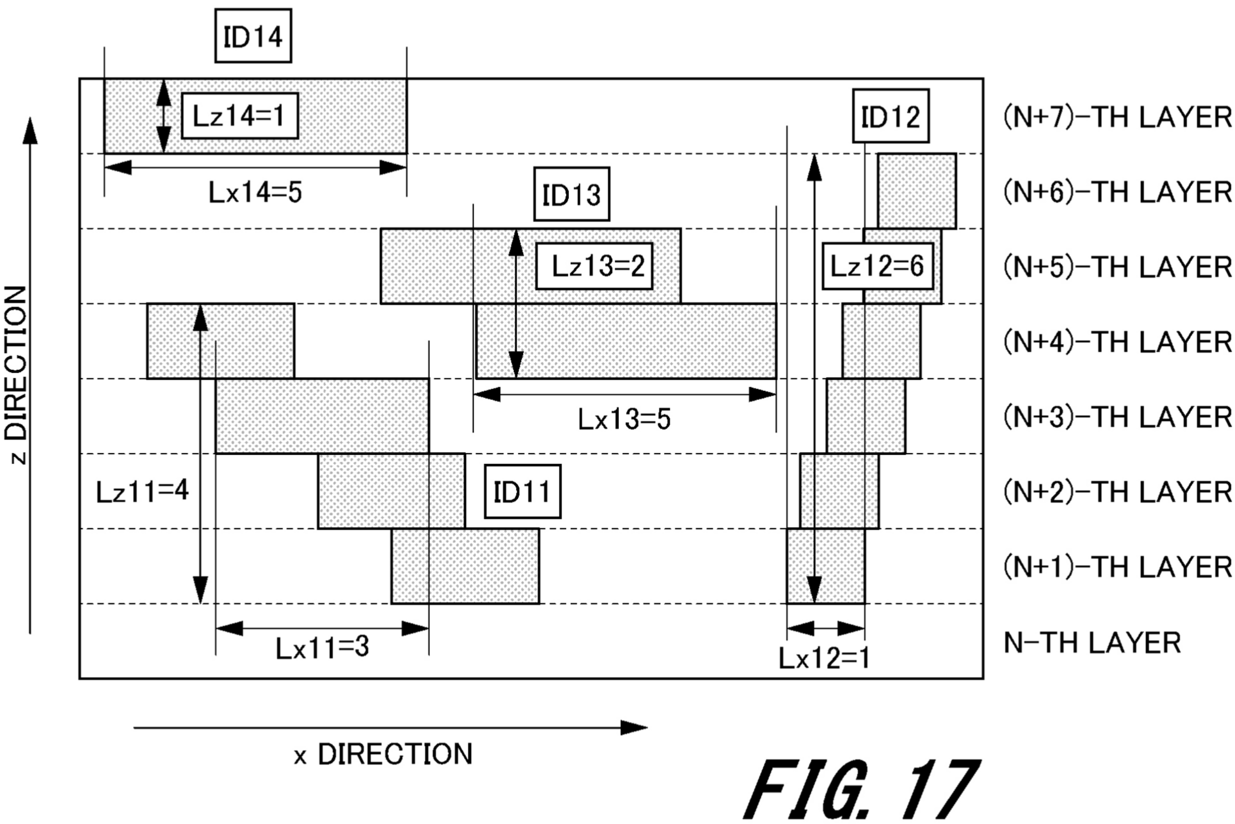
ID14
Lz14=1
Lx14=5
ID13
Lz13=2
Lx13=5
ID12
Lz12=6
Lx12=1
ID11
Lz11=4
Lx11=3
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
z DIRECTION
x DIRECTION

FIG. 17

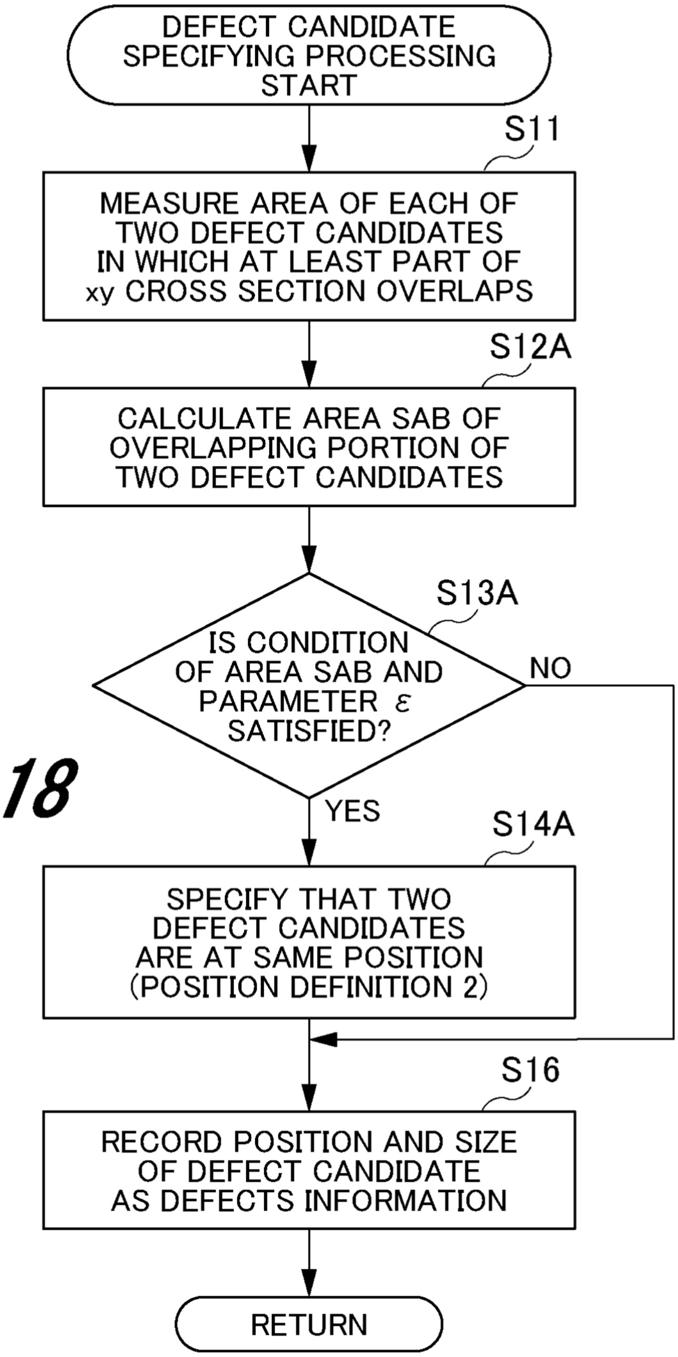
DEFECT CANDIDATE SPECIFYING PROCESSING START
S11
MEASURE AREA OF EACH OF TWO DEFECT CANDIDATES IN WHICH AT LEAST PART OF xy CROSS SECTION OVERLAPS
S12A
CALCULATE AREA SAB OF OVERLAPPING PORTION OF TWO DEFECT CANDIDATES
S13A
IS CONDITION OF AREA SAB AND PARAMETER ε SATISFIED?
NO
YES
S14A
SPECIFY THAT TWO DEFECT CANDIDATES ARE AT SAME POSITION (POSITION DEFINITION 2)
S16
RECORD POSITION AND SIZE OF DEFECT CANDIDATE AS DEFECTS INFORMATION
RETURN

FIG. 18

FIG. 19

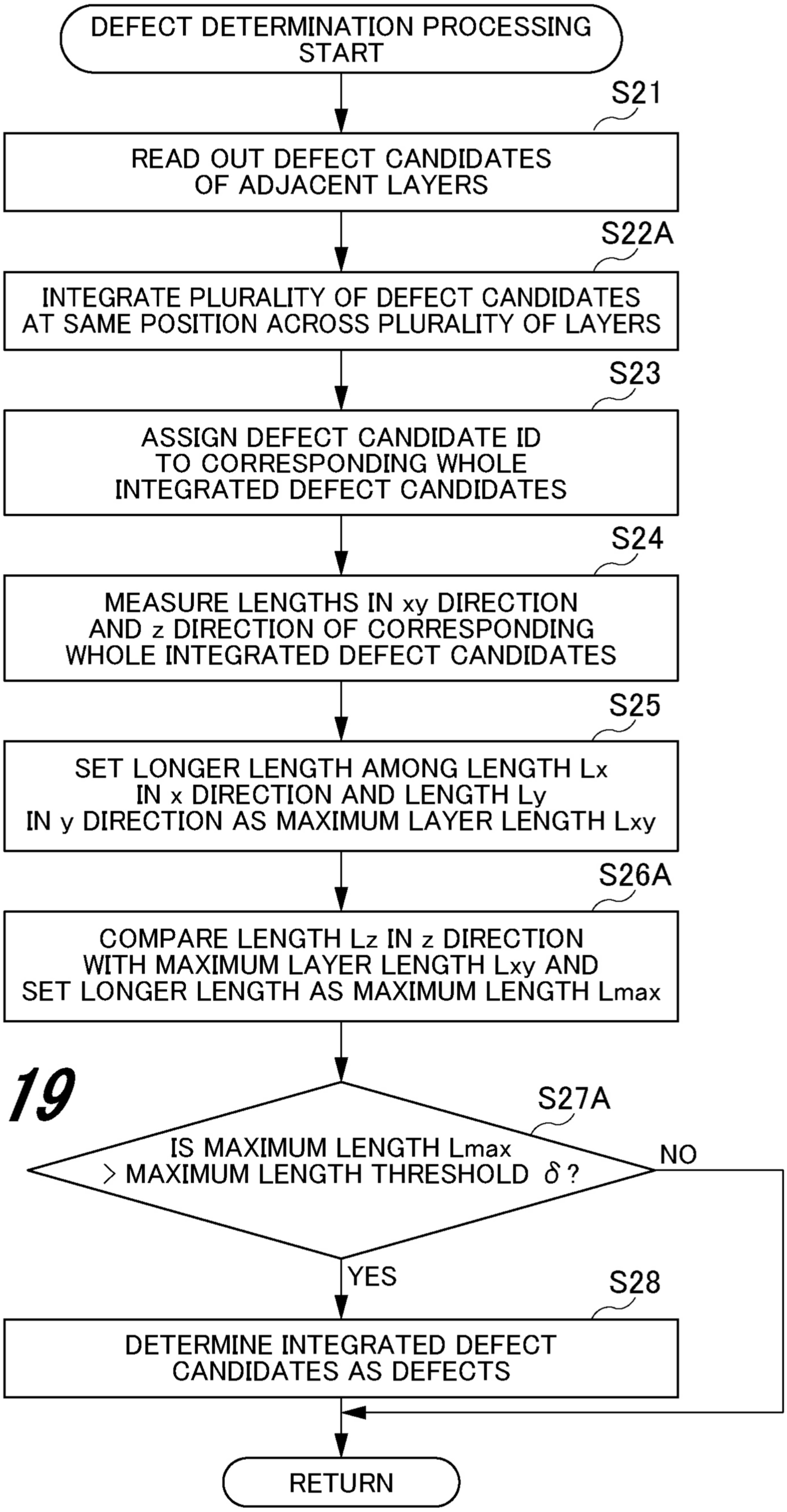
DEFECT DETERMINATION PROCESSING START
S21
READ OUT DEFECT CANDIDATES OF ADJACENT LAYERS
S22A
INTEGRATE PLURALITY OF DEFECT CANDIDATES AT SAME POSITION ACROSS PLURALITY OF LAYERS
S23
ASSIGN DEFECT CANDIDATE ID TO CORRESPONDING WHOLE INTEGRATED DEFECT CANDIDATES
S24
MEASURE LENGTHS IN xy DIRECTION AND z DIRECTION OF CORRESPONDING WHOLE INTEGRATED DEFECT CANDIDATES
S25
SET LONGER LENGTH AMONG LENGTH Lx IN x DIRECTION AND LENGTH Ly IN y DIRECTION AS MAXIMUM LAYER LENGTH Lxy
S26A
COMPARE LENGTH Lz IN z DIRECTION WITH MAXIMUM LAYER LENGTH Lxy AND SET LONGER LENGTH AS MAXIMUM LENGTH Lmax
S27A
IS MAXIMUM LENGTH Lmax > MAXIMUM LENGTH THRESHOLD δ?
NO
YES
S28
DETERMINE INTEGRATED DEFECT CANDIDATES AS DEFECTS
RETURN

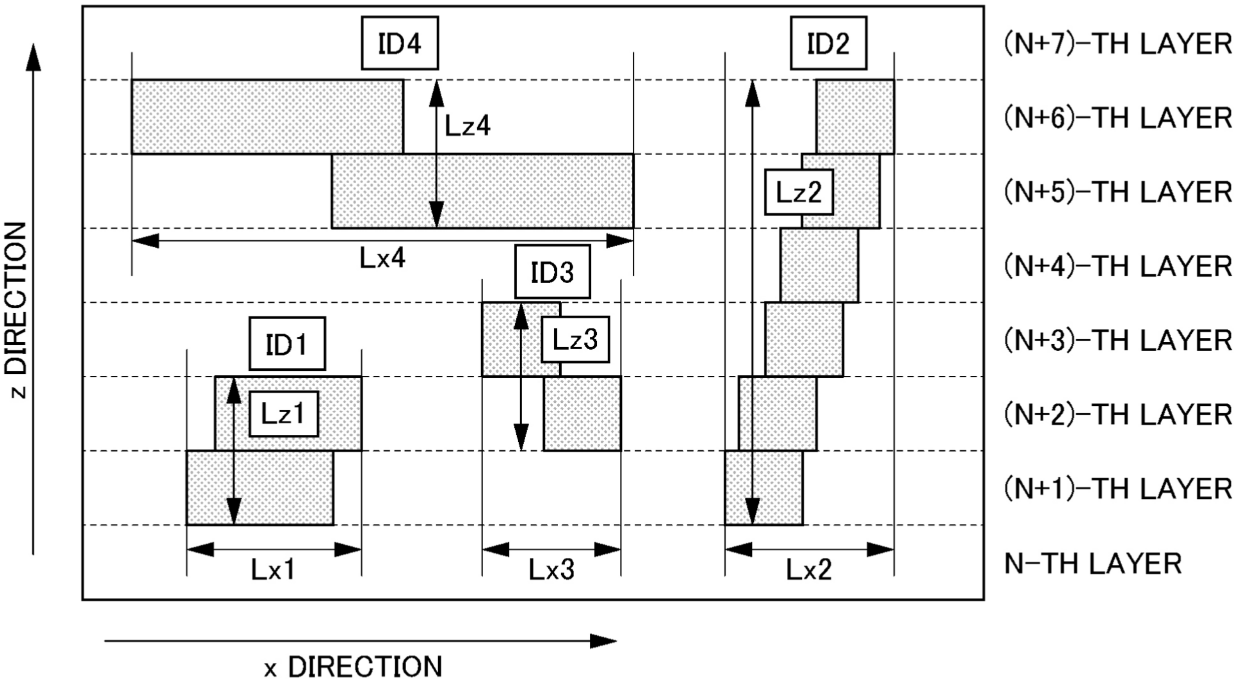
ID4
ID2
ID3
ID1
Lz4
Lz2
Lz3
Lz1
Lx4
Lx1
Lx3
Lx2
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
z DIRECTION
x DIRECTION

FIG. 20

FIG. 21

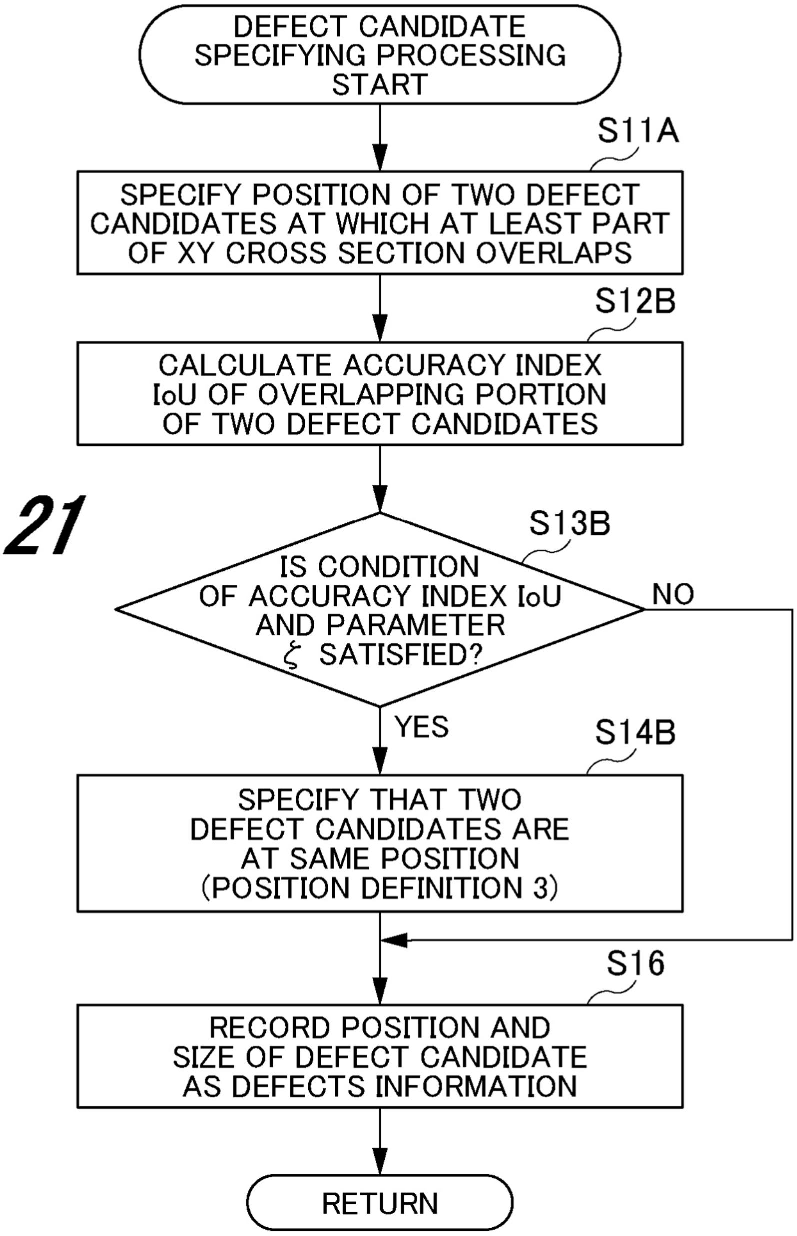
DEFECT CANDIDATE SPECIFYING PROCESSING START
S11A
SPECIFY POSITION OF TWO DEFECT CANDIDATES AT WHICH AT LEAST PART OF XY CROSS SECTION OVERLAPS
S12B
CALCULATE ACCURACY INDEX IoU OF OVERLAPPING PORTION OF TWO DEFECT CANDIDATES
S13B
IS CONDITION OF ACCURACY INDEX IoU AND PARAMETER ζ SATISFIED?
NO
YES
S14B
SPECIFY THAT TWO DEFECT CANDIDATES ARE AT SAME POSITION (POSITION DEFINITION 3)
S16
RECORD POSITION AND SIZE OF DEFECT CANDIDATE AS DEFECTS INFORMATION
RETURN

FIG. 22

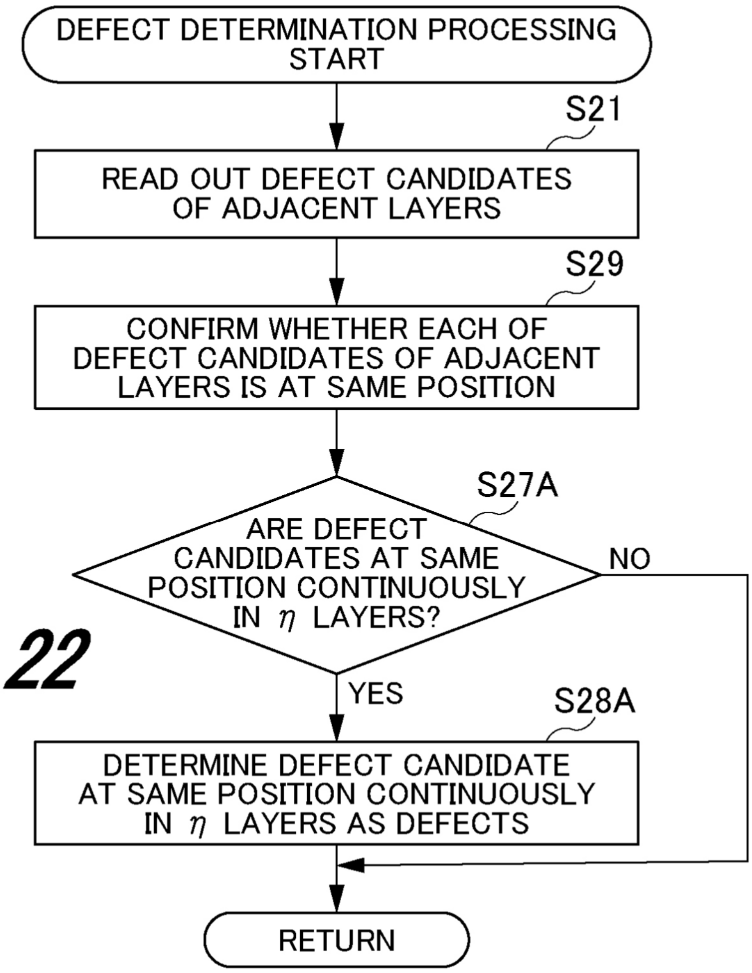
DEFECT DETERMINATION PROCESSING START
S21
READ OUT DEFECT CANDIDATES OF ADJACENT LAYERS
S29
CONFIRM WHETHER EACH OF DEFECT CANDIDATES OF ADJACENT LAYERS IS AT SAME POSITION
S27A
ARE DEFECT CANDIDATES AT SAME POSITION CONTINUOUSLY IN η LAYERS?
NO
YES
S28A
DETERMINE DEFECT CANDIDATE AT SAME POSITION CONTINUOUSLY IN η LAYERS AS DEFECTS
RETURN

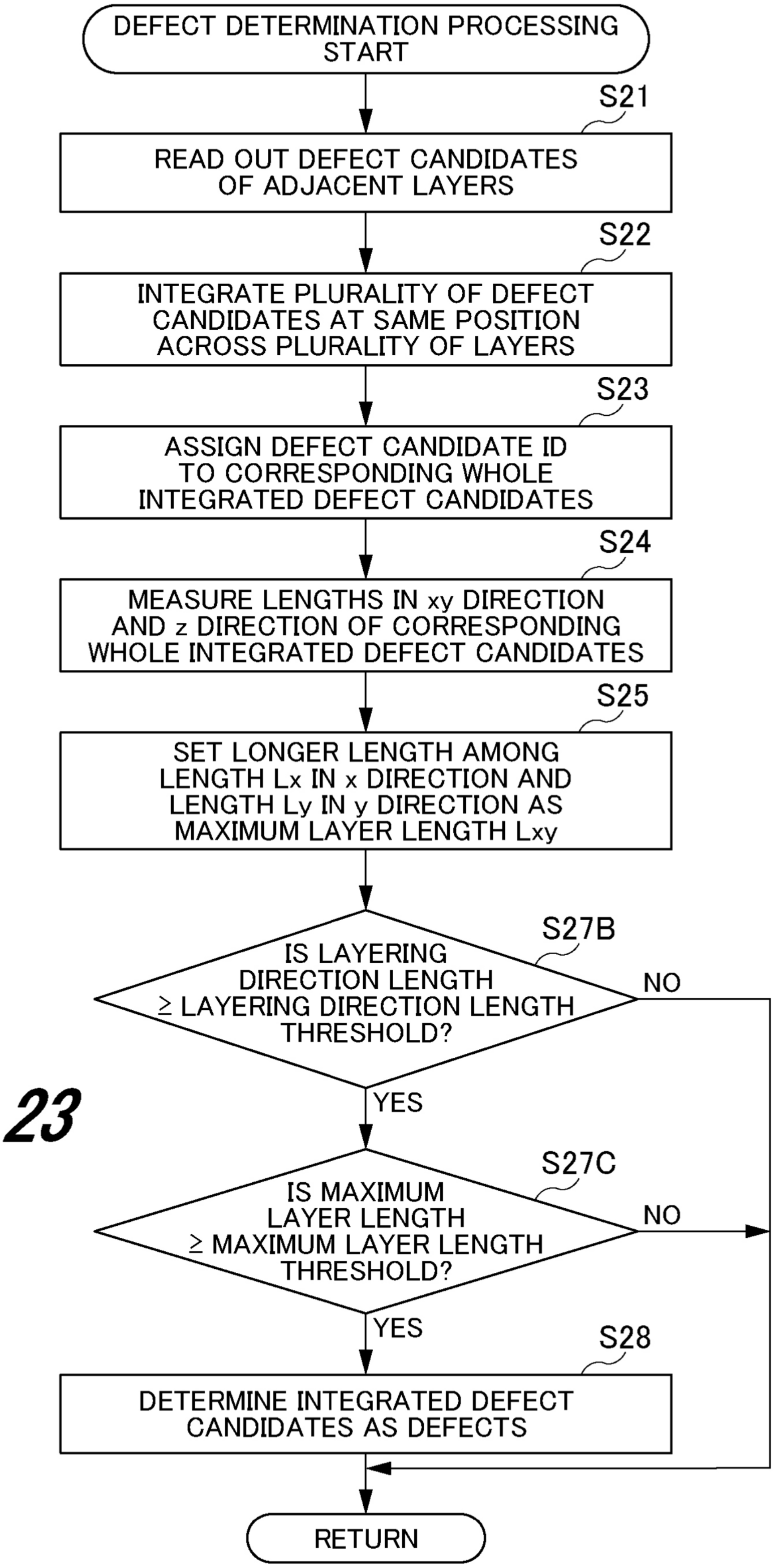
DEFECT DETERMINATION PROCESSING START
S21
READ OUT DEFECT CANDIDATES OF ADJACENT LAYERS
S22
INTEGRATE PLURALITY OF DEFECT CANDIDATES AT SAME POSITION ACROSS PLURALITY OF LAYERS
S23
ASSIGN DEFECT CANDIDATE ID TO CORRESPONDING WHOLE INTEGRATED DEFECT CANDIDATES
S24
MEASURE LENGTHS IN xy DIRECTION AND z DIRECTION OF CORRESPONDING WHOLE INTEGRATED DEFECT CANDIDATES
S25
SET LONGER LENGTH AMONG LENGTH Lx IN x DIRECTION AND LENGTH Ly IN y DIRECTION AS MAXIMUM LAYER LENGTH Lxy
S27B
IS LAYERING DIRECTION LENGTH ≥ LAYERING DIRECTION LENGTH THRESHOLD?
NO
YES
S27C
IS MAXIMUM LAYER LENGTH ≥ MAXIMUM LAYER LENGTH THRESHOLD?
NO
YES
S28
DETERMINE INTEGRATED DEFECT CANDIDATES AS DEFECTS
RETURN

FIG. 23

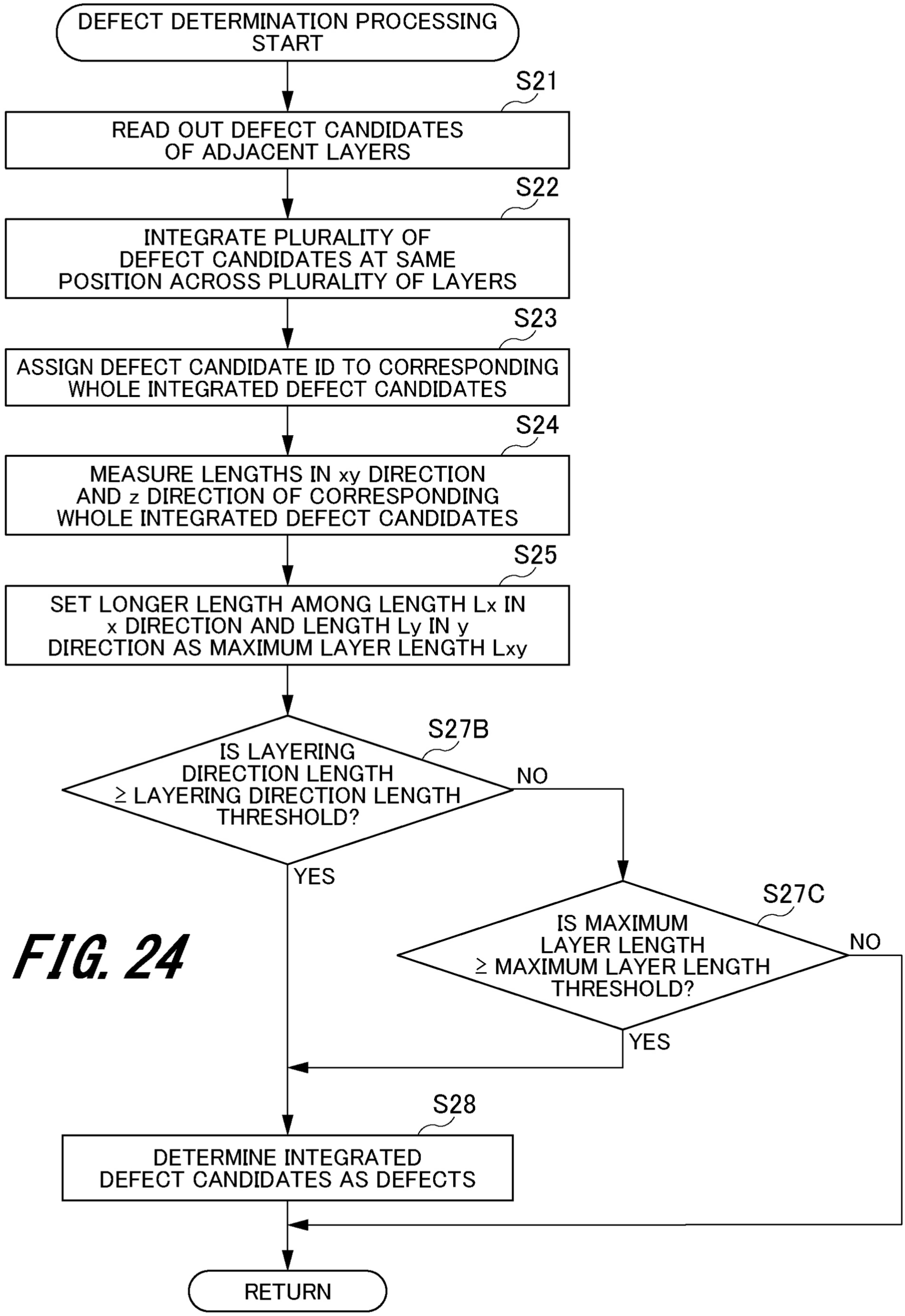
DEFECT DETERMINATION PROCESSING START
S21
READ OUT DEFECT CANDIDATES OF ADJACENT LAYERS
S22
INTEGRATE PLURALITY OF DEFECT CANDIDATES AT SAME POSITION ACROSS PLURALITY OF LAYERS
S23
ASSIGN DEFECT CANDIDATE ID TO CORRESPONDING WHOLE INTEGRATED DEFECT CANDIDATES
S24
MEASURE LENGTHS IN xy DIRECTION AND z DIRECTION OF CORRESPONDING WHOLE INTEGRATED DEFECT CANDIDATES
S25
SET LONGER LENGTH AMONG LENGTH Lx IN x DIRECTION AND LENGTH Ly IN y DIRECTION AS MAXIMUM LAYER LENGTH Lxy
S27B
IS LAYERING DIRECTION LENGTH ≥ LAYERING DIRECTION LENGTH THRESHOLD?
NO
YES
S27C
IS MAXIMUM LAYER LENGTH ≥ MAXIMUM LAYER LENGTH THRESHOLD?
NO
YES
S28
DETERMINE INTEGRATED DEFECT CANDIDATES AS DEFECTS
RETURN

FIG. 24

Europäisches Patentamt
European Patent Office
Office européen des brevets

# EUROPEAN SEARCH REPORT

Application Number
EP 25 21 2444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 2023 181933 A (HITACHI LTD)<br>25 December 2023 (2023-12-25)<br>* paragraphs [0017], [0026] - [0027], [0032], [0051], [0061]; claims 1-15; figures 1-3 *<br>----- | 1,17,18<br>1-18 | INV.<br>B22F10/28<br>B33Y10/00<br>B33Y30/00<br>B22F12/90<br>B33Y50/02<br>B22F10/38<br>B22F10/85<br>G06T7/00<br>B22F12/41<br>B22F10/80<br>G06T7/174<br>G06T7/50<br>G01N21/88<br><br>ADD.<br>B29C64/153<br>B29C64/393 |
| Y | US 2022/324175 A1 (MORIMATSU DAISUKE [JP] ET AL) 13 October 2022 (2022-10-13)<br>* paragraph [0002]; figure 2 *<br>* paragraphs [0086] - [0088], [0092] - [0093], [0105] - [0106]; claims 13-19,24; figures 3,4 *<br>* paragraphs [0116] - [0120], [0129], [0144], [0149] - [0153]; figures 7-8,10 *<br>* paragraphs [0172] - [0175], [0184]; figure 12 *<br>----- | 1-18 | |
| Y | EP 3 950 180 A1 (SIEMENS ENERGY GLOBAL GMBH & CO KG [DE])<br>9 February 2022 (2022-02-09)<br>* paragraphs [0030], [0063], [0068] - [0070]; claims 1-5,9,13; figures 1-2,4,6 *<br>----- | 3,4,8,9,<br>12-14 | TECHNICAL FIELDS SEARCHED (IPC)<br><br>B33Y<br>B22F<br>B29C<br>G05B<br>B23K<br>G06T<br>G01N |
| Y | US 2013/301927 A1 (CLIFTON DAVID [GB] ET AL) 14 November 2013 (2013-11-14)<br>* paragraphs [0058] - [0066], [0078]; claims 1-4; figures 1-4 *<br>-----<br>-/-- | 2,7 | |

The present search report has been drawn up for all claims

2

| Place of search | Date of completion of the search | Examiner |
|---|---|---|
| The Hague | 26 March 2026 | Aliouane, Nadir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 21 2444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MIRELES JORGE ET AL: "Closed-loop automatic feedback control in electron beam melting", THE INTERNATIONAL JOURNAL OF ADVANCED MANUFACTURING TECHNOLOGY SPRINGER, LONDON, vol. 78, no. 5, 7 January 2015 (2015-01-07), pages 1193-1199, XP035491751, ISSN: 0268-3768, DOI: 10.1007/S00170-014-6708-4 [retrieved on 2015-01-07] * abstract; figures 1-2,6 * * title, section 3 Methods; page 1195 - page 197 * * section conclusion * ----- | 1-18 | B33Y50/00 |
| A | US 2014/308153 A1 (LJUNGBLAD ULRIC [SE]) 16 October 2014 (2014-10-16) * claims 14-17; figures 1-3 * ----- | 1,17,18 | |
| | | | TECHNICAL FIELDS SEARCHED (IPC) |

The present search report has been drawn up for all claims

2

| Place of search | Date of completion of the search | Examiner |
|---|---|---|
| The Hague | 26 March 2026 | Aliouane, Nadir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 25 21 2444

This annex lists the patent family members relating to the patent documents cited in the above-mentioned European search report. The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| JP 2023181933 A | 25-12-2023 | DE 112023000895 T5 | 05-12-2024 |
| | | JP 2023181933 A | 25-12-2023 |
| | | WO 2023243403 A1 | 21-12-2023 |
| US 2022324175 A1 | 13-10-2022 | CN 114450584 A | 06-05-2022 |
| | | DE 112020004392 T5 | 02-06-2022 |
| | | JP 7572362 B2 | 23-10-2024 |
| | | JP WO2021054127 A1 | 25-03-2021 |
| | | US 2022324175 A1 | 13-10-2022 |
| | | WO 2021054127 A1 | 25-03-2021 |
| EP 3950180 A1 | 09-02-2022 | CN 116075381 A | 05-05-2023 |
| | | EP 3950180 A1 | 09-02-2022 |
| | | EP 4142969 A1 | 08-03-2023 |
| | | US 2024239049 A1 | 18-07-2024 |
| | | WO 2022028753 A1 | 10-02-2022 |
| US 2013301927 A1 | 14-11-2013 | CN 103339929 A | 02-10-2013 |
| | | EP 2647194 A1 | 09-10-2013 |
| | | JP 6139002 B2 | 31-05-2017 |
| | | JP 2013546084 A | 26-12-2013 |
| | | JP 2016185337 A | 27-10-2016 |
| | | US 2013301927 A1 | 14-11-2013 |
| | | WO 2012072995 A1 | 07-06-2012 |
| US 2014308153 A1 | 16-10-2014 | CN 104023948 A | 03-09-2014 |
| | | EP 2797730 A1 | 05-11-2014 |
| | | US 2014308153 A1 | 16-10-2014 |
| | | US 2019039139 A1 | 07-02-2019 |
| | | US 2019039140 A1 | 07-02-2019 |
| | | WO 2013098054 A1 | 04-07-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020200501 A